# EUROPEAN PATENT APPLICATION

(11) **EP 4 759 169 A1**
(43) Date of publication of application: **17.06.2026**
(21) Application number: 24852165.0
(22) Date of filing: 30.07.2024
(51) Int. Cl.: A24F 40/95, A24F 40/40, A24F 40/42, A24F 40/46, A24F 40/50, A24F 40/57

(54) **AEROSOL GENERATING DEVICE**

(30) Priority: 09.08.2023 KR 20230104351; 16.10.2023 KR 20230137985
(71) Applicant: KT&G Corporation, Daedeok-gu Daejeon 34337 (KR)
(72) Inventor: JANG, Chul Ho, Bucheon-si, Gyeonggi-do 14725 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/011100
(87) International publication number: WO 2025/033809

(57) **Abstract**

An aerosol generating device includes a body including an accommodating space for accommodating an aerosol generating article, a heater configured to heat the aerosol generating article accommodated in the accommodating space, a battery configured to supply power to an interior of the body, a receiving terminal arranged in a portion of the body to receive power and transmit power to internal components of the body, and a fastening member detachably coupling the battery to the body, wherein the body further includes a first extension and a second extension extending while facing each other, and a coupling space for accommodating the battery between the first extension and the second extension, and power is transmitted from the battery accommodated in the coupling space to the receiving terminal via the fastening member penetrating through the first extension.

## Description

### Technical Field

Various embodiments of the present disclosure relate to an aerosol generating device, and more particularly, to an aerosol generating device having a structure that engages in coupling of a battery and simultaneously mediating power supply.

### Background Art

Recently, the demand for alternative methods for overcoming the shortcomings of general cigarettes has increased. For example, there is an increasing demand for a system for generating aerosols by heating a cigarette or an aerosol-generating material by using an aerosol-generating device, rather than by burning cigarettes. Accordingly, research on heating-type aerosol-generating devices has been actively conducted.

As interest in environmental issues increases worldwide, environmental friendliness and safety are demanded throughout the entire life cycle of batteries, from production to recycling. Accordingly, in the field of aerosol-generating devices, research on detachable batteries has been newly conducted while promoting the development of related technologies, such as reuse and recycling of batteries.

### Disclosure of Invention

### Technical Problem

Embodiments provide an aerosol generating device having a structure that mediates power supply while simultaneously engaging in battery coupling.

The technical problems of the present disclosure are not limited to the above-described description, and other technical problems may be clearly understood by one of ordinary skill in the art from the embodiments to be described hereinafter.

### Solution to Problem

An aerosol generating device according to an embodiment may include a body including an accommodating space for accommodating an aerosol generating article, a heater configured to heat the aerosol generating article accommodated in the accommodating space, a battery configured to supply power to an interior of the body, a receiving terminal arranged in a portion of the body to receive power and transmit power to internal components of the body, and a fastening member detachably coupling the battery to the body, wherein the body may further include a first extension and a second extension extending while facing each other, and a coupling space for accommodating the battery between the first extension and the second extension, and power may be transmitted from the battery accommodated in the coupling space to the receiving terminal via the fastening member penetrating through the first extension.

### Advantageous Effects of Invention

According to an aerosol generating device according to embodiments, a battery may be coupled to a body by using one component while performing a function of a terminal for supplying power, and thus an internal space of the aerosol generating device may be used efficiently.

Effects of the present disclosure are not limited to the above effects, and effects that are not mentioned could be clearly understood by one of ordinary skill in the art from the present specification and the attached drawings.

### Brief Description of Drawings

FIGS. 1A to 1C are drawings showing examples of an aerosol generating device according to an embodiment.
FIG. 2 is a schematic perspective view of an aerosol generating device according to an embodiment of the present disclosure.
FIG. 3A is a cross-sectional view of a first state of a fastening member and a body, applicable to the aerosol generating device of FIG. 2.
FIG. 3B is a cross-sectional view of a second state of a battery and the body of FIG. 3A.
FIG. 4A is a cross-sectional view of a first state of a fastening member and a body, applicable to an aerosol generating device, according to another embodiment.
FIG. 4B is a cross-sectional view of a second state of a battery and the body of FIG. 4A.
FIG. 5A is a cross-sectional view of a first state of a fastening member and a body, applicable to an aerosol generating device, according to another embodiment.
FIG. 5B is a cross-sectional view of a second state of a battery and the body of FIG. 5A.
FIG. 6A is a cross-sectional view of a first state of a fastening member and a body, applicable to an aerosol generating device, according to another embodiment.
FIG. 6B is a cross-sectional view of a second state of a battery and the body of FIG. 6A.
FIG. 7A is a cross-sectional view of a first state of a fastening member and a body, applicable to an aerosol generating device, according to another embodiment.
FIG. 7B is a cross-sectional view of a second state of a battery and the body of FIG. 7A.
FIG. 8A is an exploded perspective view of a fastening member and surrounding components, applicable to an aerosol generating device, according to another embodiment.
FIG. 8B is a cross-sectional view of an assembly of the fastening member and the surrounding components of FIG. 8A.
FIG. 9A is an exploded perspective view of a fastening member and surrounding components, applicable to an aerosol generating device, according to another embodiment.
FIG. 9B is a cross-sectional view of an assembly of the fastening member and the surrounding components of FIG. 9A.
FIG. 10 is a block diagram of an aerosol generating device according to another embodiment of the present disclosure.

### Mode for the Invention

Hereinafter, embodiments will be described in detail with reference to the accompanying drawings, and the same or similar components will be assigned the same reference numerals regardless of the reference numerals in the drawings, and the same descriptions thereof will be omitted.

Terms such as "...unit" and " ...module," are used in the following description in consideration of only ease of drafting of the specification, and thus do not have distinct meanings or roles in themselves.

In the description of embodiments of the disclosure, certain detailed explanations of the related art are omitted when it is deemed that they may unnecessarily obscure the essences of embodiments of the disclosure. In addition, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

While such terms as "first", "second", etc., may be used to describe various components, such components must not be limited to the above terms. The above terms are used only to distinguish one component from another.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

An expression used in the singular encompasses the expression of the plural, unless it has a clearly different meaning in the context.

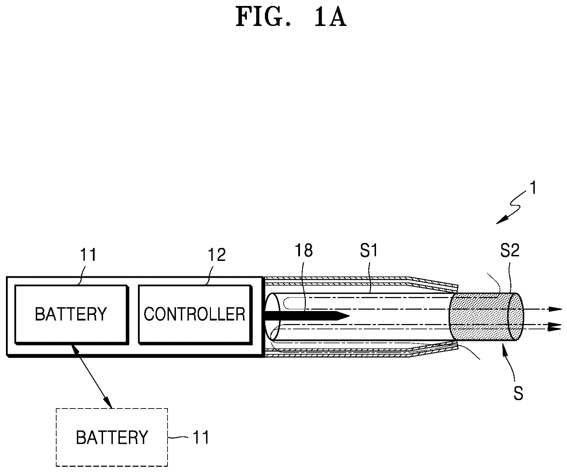

FIGS. 1A to 1C are diagrams showing examples of an aerosol-generating device according to an embodiment.

FIGS. 1A to 1C illustrate examples in which a cigarette (hereinafter, an "aerosol generating article" or a "stick" may be used interchangeably with the term) is inserted into an aerosol generating device.

Referring to FIGS. 1A to 1C, an aerosol generating device 1 may include a battery 11, a controller 12, a heater 18, and a cartridge 19.

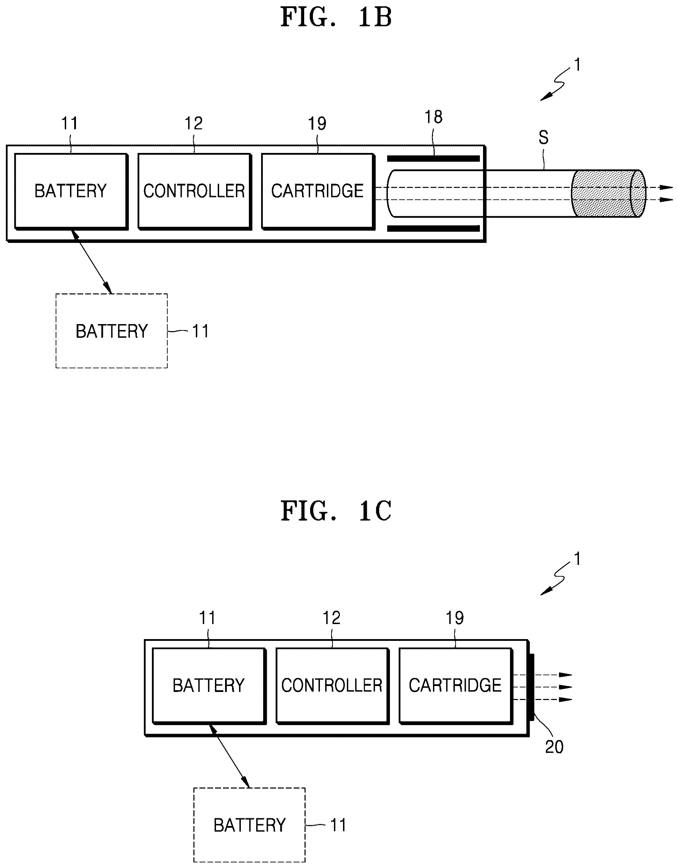

Referring to FIG. 1A, the aerosol generating device 1 includes the battery 11, the controller 12, and the heater 18. Referring to FIG. 1B, the aerosol generating device 1 further includes the cartridge 19. An aerosol generating article S can be inserted into the internal space of the aerosol generating device 1.

When the aerosol generating article S is inserted into the aerosol generating device 1, the aerosol generating device 1 may generate an aerosol by operating the heater 18 and/or the cartridge 19. An aerosol generated by the heater 18 and/or the cartridge 19 passes through the aerosol generating article S and is delivered to a user. As an occasion demands, the aerosol generating device 1 may heat the heater 18 even when the aerosol generating article S is not inserted into the aerosol generating device 1.

Meanwhile, the heater 18 may be omitted. Referring to FIG. 1C, the aerosol generating device 1 includes the battery 11, the controller 12, and the cartridge 19. The aerosol generating device 1 of FIG. 1C has no internal space into which the aerosol generating article S may be inserted, and the heater 18 for heating the aerosol generating article S is not provided.

FIGS. 1A to 1C illustrate components of the aerosol generating device 1, which are related to the present embodiment. Accordingly, it will be understood by one of ordinary skill in the art pertaining to the present embodiment that other general-purpose elements may be further included in the aerosol generating device 1 in addition to the elements illustrated in FIGS. 1A to 1C.

FIGS. 1A to 1C illustrate that components are arranged in a row in the aerosol generating device 1. However, the internal structure of the aerosol generating device 1 is not limited to those illustrated in FIGS. 1A to 1C. For example, the cartridge 19 and the heater 18 may be arranged in parallel. In other words, depending on the design of the aerosol generating device 1, the arrangement of the battery 11, the controller 12, the heater 18, and the cartridge 19 may be changed.

The battery 11 supplies electric power used for the aerosol generating device 1 to operate. For example, the battery 11 may supply power for heating the heater 18 or the cartridge 19 and supply power for operating the controller 12. In addition, the battery 11 may supply power for operating a display, a sensor, a motor, and the like installed in the aerosol generating device 1.

The battery 11 may be a removable type (detachable) power source. The battery 11 is provided with an electrical contact, and, when the battery 11 is mounted in the aerosol generating device 1, the electrical contact of the battery 11 may be implemented to be electrically connected to an electrical contact provided in the aerosol generating device 1 to supply power to the aerosol generating device 1. According to another embodiment, the battery 11 may be provided with a charging coil for supplying power to the aerosol generating device 1 in a wireless charging manner, instead of a separate electrical contact. In other words, the power supply method of the battery 11 may vary, and the electrical connection method of the battery 11 and the aerosol generating device 1 may vary depending on the power supply method supported by the battery 11.

The detachable battery 11 may be provided with a charger interface that may be connected to an external charger. Power for charging the detachable battery 11 may be provided to the battery 11 via the charger interface. The battery 11 may be charged by an external charger while connected to the aerosol generating device 1 or while separated from the aerosol generating device 1.

The controller 12 controls the overall operation of the aerosol generating device 1. In detail, the controller 12 controls the operation of the battery 11, heater 18, and cartridge 19 as well as other components included in the aerosol generating device 1. The controller 12 may also check the status of each of the components of the aerosol generating device 1 and determine whether the aerosol generating device 1 is in an operable state.

The controller 12 includes at least one processor. A processor can be implemented as an array of a plurality of logic gates or can be implemented as a combination of a general-purpose microprocessor and a memory in which a program executable in the microprocessor is stored. Also, it may be understood by one of ordinary skill in the art that the processor may be implemented as other types of hardware.

The heater 18 may be heated by power supplied from the battery 11. For example, when a cigarette is inserted into the aerosol generating device 1, the heater 18 may be located outside the cigarette. Therefore, the heated heater 18 may raise the temperature of an aerosol generating material in the cigarette.

The heater 18 may be an electro-resistive heater. For example, the heater 18 includes an electrically conductive track, and the heater 18 may be heated as a current flows through the electrically conductive track. However, the heater 18 is not limited to the above-stated example, and may be used without limitation as long as theater 18 may be heated to a desired temperature. Here, the desired temperature may be pre-set in the aerosol generating device 1 or may be set to a desired temperature by a user.

Meanwhile, according to another embodiment, the heater 18 may be an induction heating heater. In detail, the aerosol generating device 1 may include an induction coil (not shown) surrounding the heater 18. When power is supplied to the induction coil by the battery 11, the induction coil may heat the heater 18. The heater 18 is a susceptor, and the heater 18 may be heated by a magnetic field generated by an AC current flowing through the induction coil. The magnetic field may penetrate through the heater 18 and generate eddy currents within the heater 18. A current may generate heat in the heater 18.

Meanwhile, a cigarette may include a susceptor that may be heated by an induction heater. A susceptor may be included inside the cigarette, and the susceptor inside the cigarette may be heated by a magnetic field generated by an AC current flowing through the induction coil.

Although FIGS. 1A and 1B show that the heater 18 is positioned outside the aerosol generating article S, but the present disclosure is not limited thereto. The heater 18 may include a tubular heating element, a plate-shaped heating element, a needle-shaped heating element, or a rod-shaped heating element and may heat the inside or the outside of the aerosol generating article S depending on the shape of a heating element.

Also, a plurality of heaters 18 may be arranged in the aerosol generating device 1. At this time, the plurality of heaters 18 may be arranged to be inserted into the interior of the aerosol generating article S or may be arranged outside the aerosol generating article S. Also, some of the plurality of heaters 18 may be arranged to be inserted into the interior of the aerosol generating article S, and the remaining of the plurality of heaters 18 may be arranged outside the aerosol generating article S. Also, the shape of the heater 18 is not limited to shapes shown in FIGS. 1A and 1B, and may be manufactured in various shapes.

The cartridge 19 may heat a liquid composition to generate an aerosol, and a generated aerosol may be delivered to a user through the aerosol generating article S.

In other words, an aerosol generated by the cartridge 19 may move along an airflow passage of the aerosol generating device 1. In FIG. 1A and FIG. 1B, an aerosol moved along the airflow passage may pass through the aerosol generating article S and be delivered to a user. In FIG. 1C, the aerosol moved along the airflow passage may be delivered to the user through a mouthpiece 20.

The cartridge 19 may include, but is not limited to, a liquid storage, a liquid delivery means, and a cartridge heater. For example, the liquid storage, the liquid delivery means, and the cartridge heater may be included in the aerosol generating device 1 as independent modules.

The liquid storage may store a liquid composition. For example, the liquid composition may be a liquid including a tobacco-containing material containing volatile tobacco flavor components or may be a liquid including a non-tobacco material. The liquid storage may be manufactured to be detachable from/attachable to the cartridge 19 or may be manufactured integrally with the cartridge 19.

For example, the liquid composition may include water, a solvent, ethanol, plant extracts, flavorings, flavoring agents, or a vitamin mixture. Flavorings may include, but are not limited to, menthol, peppermint oil, spearmint oil, and various fruit-flavored ingredients. The flavoring may include ingredients capable of providing a user with a variety of flavors. Vitamin mixtures can be a mixture of at least one of vitamin A, vitamin B, vitamin C, and vitamin E, but are not limited thereto. Also, the liquid composition may include an aerosol former such as glycerin and propylene glycol.

The liquid delivery means may deliver a liquid composition from the liquid storage to an element to be heated. For example, the liquid delivery element may be a wick such as cotton fiber, ceramic fiber, glass fiber, or porous ceramic, but is not limited thereto.

The cartridge heater is an element for heating a liquid composition delivered by a liquid delivery means. The cartridge heater may be, but is not limited to, a metal heating wire, a metal heating plate, A ceramic heater, etc. However, the present disclosure is not limited thereto, and the cartridge heater may include various methods of generating an aerosol from an aerosol generating material.

For example, the cartridge heater may include a conductive filament such as nichrome wire and may be positioned as being wound around the liquid delivery element. The cartridge heater may be heated by a current supply and may transfer heat to the liquid composition in contact with the cartridge heater, thereby heating the liquid composition. As a result, aerosol may be generated.

According to another embodiment, the cartridge heater may include a susceptor material that is heated by an induced magnetic field, and the cartridge heater may be heated by an induced magnetic field generated by an induction coil positioned separately from a heating element.

According to another embodiment, the cartridge heater may be an ultrasonic vibrator that generates an aerosol from an aerosol generating material by utilizing ultrasonic vibration. Ultrasonic vibration method may refer to a method of generating an aerosol by atomizing an aerosol generating material with ultrasonic vibration generated by a vibrator.

The cartridge heater may be disposed on a liquid delivery means, either permanently or reversibly attached to the liquid delivery means, such as by coating, spraying, depositing, plating, immersing, painting, printing, 3D printing, using a tool, or by bonding according to structural features, such as being wound around the liquid delivery means. Also, the cartridge heater may be placed in the liquid delivery means by, for example, sintering the cartridge heater together with the liquid delivery means during the process of manufacturing the liquid delivery means. However, the arrangement of the cartridge heater is not limited to the examples described above, and may include various methods in which the cartridge heater may be disposed in a liquid delivery means while maintaining its function.

The cartridge heater may also be referred to as a cartomizer or atomizer, but is not limited thereto.

The cartridge 19 may be inserted into and removed from the main body of the aerosol generating device 1 or the aerosol generating device 1. When the aerosol generating material stored in the cartridge 19 is completely consumed, the aerosol generating material may be newly replenished into the cartridge 19 or the cartridge 19 may be replaced with another cartridge 19 containing the aerosol generating material.

Meanwhile, the aerosol generating device 1 may further include general-purpose components in addition to the battery 11, the controller 12, the heater 18, and the cartridge 19. For example, the aerosol generating device 1 may include a display capable of outputting visual information and/or a motor for outputting tactile information. Also, the aerosol generating device 1 may include at least one sensor (a puff detection sensor, a temperature detection sensor, a cigarette insertion detection sensor, etc.). Also, the aerosol generating device 1 may be fabricated to have a structure in which the outside air may flow in or gases therein may flow out even in the state where the aerosol generating article S is inserted.

Although not illustrated in FIGS. 1A to 1C, the aerosol generating device 1 and an additional cradle may form together a system. For example, the cradle may be used to charge the battery 11 of the aerosol generating device 1. Alternatively, the heater 18 may be heated while the cradle and the aerosol generating device 1 are coupled to each other.

The aerosol generating article S may resemble a conventional combustible cigarette. For example, the aerosol generating article S may include a first portion S1 containing an aerosol generating material and a second portion S2 including a filter and the like. The first portion S1 may be referred to as a 'medium portion' hereinafter.

The second portion S2 of the aerosol generating article S may also contain an aerosol generating material. For example, an aerosol generating material made in the form of granules or capsules may be inserted into the second portion S2.

The entire first portion S1 may be inserted into the aerosol generating device 1, and the second portion S2 may be exposed to the outside. Alternatively, only a portion of the first portion S1 may be inserted into the aerosol generating device 1, or the entire first portion S1 and a portion of the second portion S2 may be inserted into the aerosol generating device 1. A user may inhale the aerosol while holding the second portion S2 by his/her lips. At this time, the aerosol is generated by as the outside air passes through the first portion S1, and the generated aerosol passes through the second portion S2 and is delivered to a user's mouth.

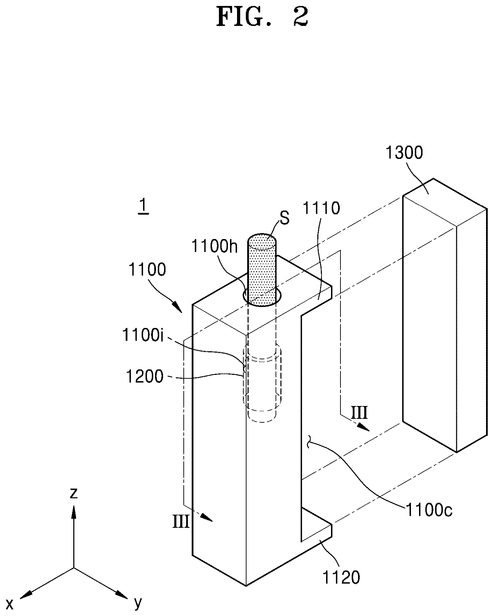

FIG. 2 is a schematic perspective view of an aerosol generating device according to an embodiment of the present disclosure.

Referring to FIG. 2, the aerosol generating device 1 according to an embodiment may include a body 1100, a heater 1200, and a battery 1300.

The body 1100 forms the overall appearance of the aerosol generating device 1 and may include an internal space in which components of the aerosol generating device 1 may be arranged. Although the drawing only shows an embodiment in which the body 1100 is formed to have a rectangular cross-section, the shape of the body 1100 is not limited thereto, and the body 1100 may be formed in an overall cylindrical shape or in a polygonal column-like shape.

The body 1100 may include an opening 1100h through which an aerosol generating article S may be inserted into the interior of the body 1100. At least a portion of the aerosol generating article S may be inserted or accommodated inside the body 1100 through the opening 1100h.

The body 1100 may include an accommodating space 1100i for accommodating the aerosol generating article S therein. The accommodating space 1100i may be formed at the upper portion of the body 1100. The accommodating space 1100i is opened upward and may be connected to the opening 1100h.

The accommodating space 1100i may have a cylindrical shape that is elongated vertically. At least a portion of the aerosol generating article S may be accommodated inside the body 1100 through the opening 1100h on the upper portion of the accommodating space 1100i. At this time, the depth of the accommodating space 1100i may correspond to the length of a region of the aerosol generating article S containing an aerosol generating material or a medium.

The heater 1200 (e.g., the heater 18 of FIGS. 1A and 1B) may generate an aerosol from the aerosol generating article S accommodated in the accommodating space 1100i. The heater 1200 may be extended vertically along the accommodating space 1100i.

According to an embodiment, the heater 1200 may surround at least a portion of the accommodating space 1100i. According to an embodiment, the heater 1200 may be a cylindrical electrical resistive heater surrounding at least a portion of the accommodating space 1100i. According to another embodiment, the heater 1200 may include a cylindrical susceptor surrounding at least a portion of the accommodating space 1100i and an induction coil surrounding the susceptor. The heater 1200 may heat the exterior of the aerosol generating article S accommodated in the accommodating space 1100i. However, embodiments are not limited to the shape and the arrangement of the heater 1200. According to another embodiment, the heater 1200 may be inserted into the interior of the aerosol generating article S.

At least a region of the aerosol generating article S accommodated in the accommodating space 1100i may be heated by the heater 1200, and vaporized particles generated by heating the aerosol generating article S and the air introduced into the internal space of the body 1100 through an air inlet (e.g., the opening 1100h) formed in a region of the body 1100 may be mixed with each other to generate an aerosol.

Meanwhile, the heater 1200 may be the cartridge heater of FIG. 1B and FIG. 1C. In this case, the aerosol generating article S may be the cartridge 19 of FIGS. 1B and 1C rather than a cigarette or a stick.

The aerosol generating device 1 according to an embodiment may include the battery 1300 that supplies power used to operate the aerosol generating device 1. In other words, the battery 1300may supply power to components placed inside the body 1100. Here, the battery 1300 may be the battery 11 of FIGS. 1A to 1C.

The battery 1300 may include a polygonal columnar shape as shown in FIG. 2. However, the present disclosure is not limited thereto, and the battery 1300 may have various shapes such as a cylindrical shape. Also, in FIG. 2, the battery 1300 is shown as being relatively short in the x-axis direction or the y-axis direction and relatively long in the z-axis direction. However, the specifications of the battery 1300 are not limited thereto.

Referring to FIG. 2, the battery 1300 may be detachably coupled to the body 1100. For example, the battery 1300 may be inserted into the body 1100 in the +x direction at a location spaced apart from the body 1100 in the -x direction and coupled to a region of the body 1100.

In detail, the body 1100 may include a first extension 1110 and a second extension 1120 that extend facing each other. The first extension 1110 may extend in the x-axis direction from an upper portion of the body 1100, and the second extension 1120 may extend in the x-axis direction from a lower portion of the body 1100. The battery 1300 may be inserted between the first extension 1110 and the second extension 1120.

A space between the first extension 1110 and the second extension 1120 for coupling the battery 1300 may be expressed as a coupling space 1100c. In other words, the body 1100 may include a coupling space 1100c that accommodates the battery 1300. The coupling space 1100c may include a shape corresponding to the shape of the battery 1300. For example, the coupling space 1100c may be formed to be relatively short in the x-axis direction or the y-axis direction and relatively long in the z-axis direction. The battery 1300 may be inserted between the first extension 1110 and the second extension 1120 to close the coupling space 1100c.

Meanwhile, even when the battery 1300 is accommodated in the coupling space 1100c, a component capable of firmly fixing the battery 1300 to the body 1100 is needed. Here, when the component for coupling the battery 1300 to the body 1100 may mediate the process of supplying power from the battery 1300 accommodated in the coupling space 1100c to the body 1100, the internal space of the aerosol generating device may be efficiently utilized, because there is no need to separately arrange the component for coupling and the component used for power supply.

Hereinafter, a fastening member 1500 used to detachably couple the battery 1300 to the body 1100 and mediate power supply and surrounding components will be described. In the drawings described below, one or two fastening members 1500 are illustrated for convenience of explanation, but, according to embodiments, a plurality of fastening members 1500 and a plurality of surrounding components may be arranged.

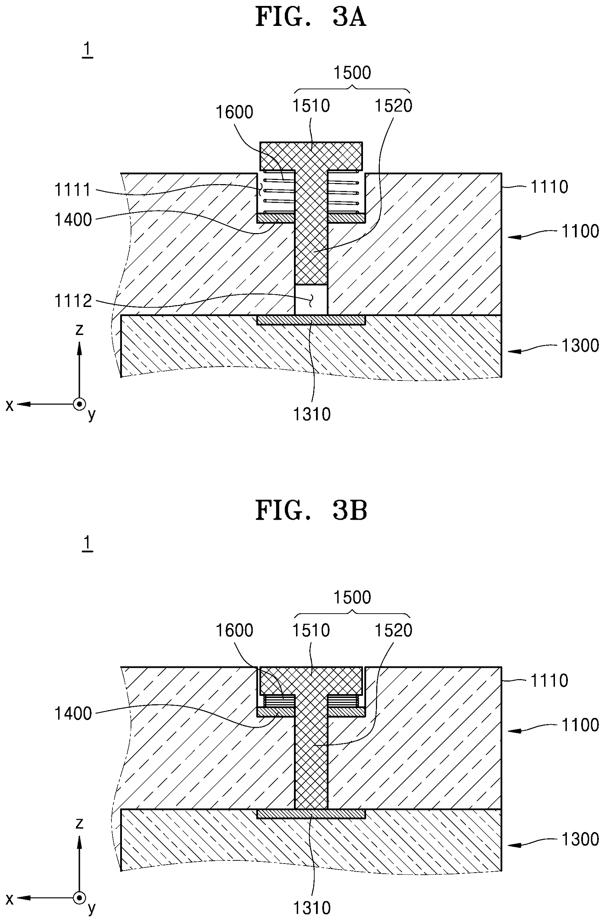

FIG. 3A is a cross-sectional view of a first state of a fastening member and a body, applicable to the aerosol generating device of FIG. 2. FIG. 3B is a cross-sectional view of a second state of the battery and the body of FIG. 3A.

Referring to FIGS. 3A and 3B, the aerosol generating device 1 according to an embodiment may include the body 1100, the battery 1300, a receiving terminal 1400, and the fastening member 1500.

At least one of the components of the aerosol generating device 1 shown in FIGS. 3A and 3B may be identical or similar to at least one of the components of the aerosol generating device 1 of FIG. 2, and any redundant description will be omitted below.

The receiving terminal 1400 is a component arranged in a portion of the body 1100 to receive power from the battery 1300. The receiving terminal 1400 may be supplied with power by coming into contact with a portion of the battery 1300.

In detail, the battery 1300 may include a supply terminal 1310 that contacts the receiving terminal 1400. By making contact between the supply terminal 1310 and the receiving terminal 1400, power may be supplied from the battery 1300 to components placed inside the body 1100.

The fastening member 1500 detachably couples the battery 1300 to the body 1100. For example, the fastening member 1500 may penetrate through the first extension 1110 of the body 1100 and press the battery 1300 toward the second extension (e.g., the second extension 1120 of FIG. 2). Therefore, the fastening member 1500 may secure the battery 1300 to the coupling space between the first extension 1110 and the second extension (e.g., the coupling space 1100c of FIG. 2).

Moreover, the fastening member 1500 may mediate the process of supplying power from the battery 1300 to the body 1100. Power may be transmitted from the battery 1300 to the receiving terminal 1400 by the fastening member 1500 penetrating through the first extension 1110. Here, when power is supplied through the fastening member 1500, at least a portion of the fastening member 1500 may include a material having electrical conductivity.

Hereinafter, the structure of the first extension 1110 through which the fastening member 1500 penetrates is described in detail. The first extension 1110 of the body 1100 may include an upper groove 1111 for accommodating the fastening member 1500. The upper groove 1111 may be opened in a direction (e.g., +z direction) opposite to the direction facing the coupling space. In other words, the upper groove 1111 may be placed on the top surface of the first extension 1110. The receiving terminal 1400 may be placed between the upper groove 1111 and the fastening member 1500 accommodated in the upper groove 1111. For example, the receiving terminal 1400 may be placed on the bottom surface of the upper groove 1111.

The first extension 1110 may include a through hole 1112 connected to the upper groove 1111. The through hole 1112 may extend to a coupling space positioned below the first extension 1110. When the fastening member 1500 is accommodated in the upper groove 1111, at least a portion of the fastening member 1500 may be arranged to protrude into the coupling space by penetrating the through hole 1112. the fastening member 1500 protruding into the coupling space may contact the battery 1300 and press the battery 1300.

Here, a supply terminal (1310) may be placed on a portion of the battery 1300 that comes into contact with the fastening member 1500. The fastening member 1500 having electrical conductivity may be accommodated in the upper groove 1111 and at least a portion of the fastening member 1500 may come into contact with the receiving terminal 1400. As the fastening member 1500 passes through the through hole 1112 and comes into contact with the supply terminal 1310, the receiving terminal 1400, the fastening member 1500, and the supply terminal 1310 may be connected. Therefore, power may be supplied from the supply terminal 1310 to the receiving terminal 1400 through the fastening member 1500.

The diameter of the through hole 1112 may be smaller than the diameter of the upper groove 1111. Therefore, the fastening member 1500 may also include a shape corresponding to shapes of the upper groove 1111 and the through hole 1112. For example, the fastening member 1500 may include a first portion 1510 accommodated in the upper groove 1111, and a second portion 1520 having a diameter smaller than that of the first portion 1510, extending from the first portion 1510, and passing through the through hole 1112 of the first extension 1110.

The method by which the fastening member 1500 is coupled to the upper groove 1111 or the through hole 1112 is not limited to a specific method. According to an embodiment, the fastening member 1500 may be pressed toward the upper groove 1111. Therefore, the first portion 1510 is forcibly fitted into the upper groove 1111 and/or the through hole 1112, thereby allowing the fastening member 1500 to be coupled to the upper groove 1111. In this case, 'forcibly fit' may be used with the same meaning as 'forced fit' or 'press-fit'.

According to another embodiment, screw threads are formed on the inner circumferential surfaces of the second portion 1520 of the fastening member 1500 and the through hole 1112, and thus the fastening member 1500 may be screw-coupled to the through hole 1112. According to another embodiment, magnets are placed on a first portion of the fastening member 1500 and the bottom surface of the upper groove 1111, and thus the fastening member 1500 may be magnetically coupled to the upper groove 1111.

Referring to FIG. 3A, a first state in which the fastening member 1500 does not contact the supply terminal 1310 of the battery 1300 is shown. Here, the first portion 1510 of the fastening member 1500 may be placed outside the upper groove 1111. The second portion 1520 of the fastening member 1500 is accommodated in the upper groove 1111 and may pass through a portion of the through hole 1112.

The receiving terminal 1400 arranged on the bottom surface of the upper groove 1111 may come into contact with the second portion 1520. However, since the second portion 1520 is not in contact with the supply terminal 1310 of the battery 1300, power is not supplied from the battery 1300 to the receiving terminal 1400.

Referring to FIG. 3B, a second state in which the fastening member 1500 is contacting the supply terminal 1310 of the battery 1300 is shown. Here, the first portion 1510 of the fastening member 1500 may be completely accommodated in the upper groove 1111. The second portion 1520 may pass through the through hole 1112 and come into contact with the supply terminal 1310 of the battery 1300 accommodated in the coupling space.

In this case, the receiving terminal 1400, the second portion 1520 of the fastening member 1500, and the supply terminal 1310 may be physically or electrically connected to one another. Therefore, power may be supplied from the battery 1300 to the receiving terminal 1400 through the fastening member 1500. Also, the second portion 1520 may press the battery 1300 toward the coupling space and the second extension. Accordingly, the fastening member 1500 may also perform the role of fixing the battery 1300 to the body 1100.

Referring to FIGS. 3A and 3B, the aerosol generating device 1 according to an embodiment may further include an elastic member 1600 for supporting the fastening member 1500. The elastic member 1600 is placed in the upper groove 1111, and the fastening member 1500, the elastic member 1600, the receiving terminal 1400, and the bottom surface of the upper groove 1111 may be aligned in the z-axis direction, which is the direction in which the upper groove 1111 is open.

The elastic member 1600 may support the fastening member 1500 between the bottom surface of the upper groove 1111 and the fastening member 1500. In detail, one end of the elastic member 1600 is connected to the bottom surface of the upper groove 1111 or the receiving terminal 1400, and the other end of the elastic member 1600 is connected to the first portion 1510 of the fastening member 1500, and thus the elastic member 1600 may support the fastening member 1500 to prevent the fastening member 1500 from coming off from the upper groove 1111 or the through hole 1112.

When the elastic member 1600 is placed, the second portion 1520 of the fastening member 1500 may come into contact with the receiving terminal 1400, but the first portion 1510 may not come into contact with the receiving terminal 1400. Therefore, even when the first portion 1510 of the fastening member 1500 includes a non-conductive material and the second portion 1520 includes a conductive material, power may be transmitted to the receiving terminal 1400 through the fastening member 1500.

According to some embodiments, the elastic member 1600 may not be placed. In this case, in the second state of FIG. 3B, the first portion 1510 of the fastening member 1500 may come into contact with the receiving terminal 1400 arranged on the bottom surface of the upper groove 1111. When the first portion 1510 may come into contact with the receiving terminal 1400 depending on the degree to which the fastening member 1500 is accommodated in the upper groove 1111, the second portion 1520 may not necessarily have to come into contact with the receiving terminal 1400.

However, even when the second portion 1520 does not come into contact with the receiving terminal 1400, both the first portion 1510 and the second portion 1520 of the fastening member 1500 need to include an electrically conductive material, such that power may be transmitted from the supply terminal 1310 to the receiving terminal 1400 through the second portion 1520 and the first portion 1510 in the order stated.

Meanwhile, although not shown in the drawings, it may be easily understood by one of ordinary skill in the art that the receiving terminal 1400, the fastening member 1500, and surrounding components thereof may be equally applied to the second extension as well as the first extension 1110 as needed. For convenience of explanation, the following explanation will focus on an embodiment in which the components are arranged at the first extension 1110.

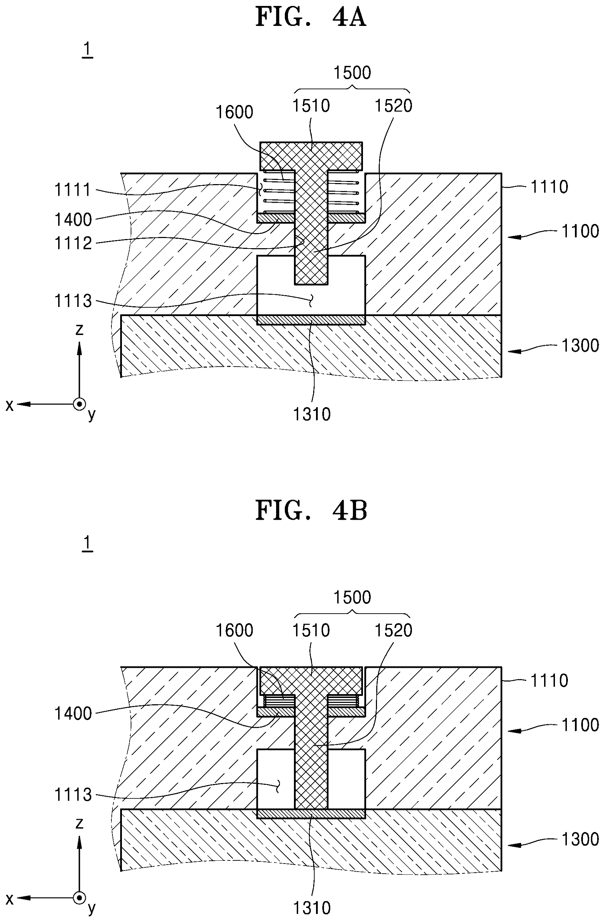

FIG. 4A is a cross-sectional view of a first state of a fastening member and a body, applicable to an aerosol generating device, according to another embodiment. FIG. 4B is a cross-sectional view of a second state of the battery and the body of FIG. 4A.

Referring to FIGS. 4A and 4B, the aerosol generating device 1 according to an embodiment may include the body 1100, the battery 1300, the receiving terminal 1400, the fastening member 1500, and the elastic member 1600.

At least one of the components of the aerosol generating device 1 shown in FIGS. 4A and 4B may be identical or similar to at least one of the components of the aerosol generating device 1 shown in FIGS. 3A and 3B, and any redundant description will be omitted below.

The first extension 1110 of the body 1100 may include a lower groove 1113 that opens toward a coupling space (e.g., the coupling space 1100c of FIG. 2). The lower groove 1113 may be placed on the bottom surface of the first extension 1110 and may be open in the -z direction. The upper groove 1111, the through hole 1112, and the lower groove 1113 may be arranged, such that the upper groove 1111 is aligned in an open direction (e.g., in the z-axis direction).

By disposing the lower groove 1113 at the lower portion of the through hole 1112, the length of the through hole 1112 may be shortened compared to the embodiments shown in FIGS. 3A and 3B. Since the length of the through hole 1112, which is a portion that supports the fastening member 1500, is shortened, the force needed in the process of coupling the fastening member 1500 to the first extension 1110 or separating the fastening member 1500 from the first extension 1110 through forced fitting or screw coupling may be reduced.

Referring to FIG. 4A, a first state in which the fastening member 1500 does not contact the supply terminal 1310 of the battery 1300 is shown. Here, the first portion 1510 of the fastening member 1500 may be placed outside the upper groove 1111. The second portion 1520 of the fastening member 1500 is accommodated in the upper groove 1111 and may penetrate through the through hole 1112 and be exposed in the lower groove 1113.

The receiving terminal 1400 arranged on the bottom surface of the upper groove 1111 may come into contact with the second portion 1520. Although the battery 1300 has the supply terminal 1310 exposed toward the lower groove 1113, the second portion 1520 does not contact the supply terminal 1310, and thus power is not supplied from the battery 1300 to the receiving terminal 1400.

Referring to FIG. 4B, a second state in which the fastening member 1500 is contacting the supply terminal 1310 of the battery 1300 is shown. Here, the first portion 1510 of the fastening member 1500 may be completely accommodated in the upper groove 1111. The second portion 1520 may penetrate through the through hole 1112 and the lower groove 1113 and contact the supply terminal 1310 of the battery 1300 exposed toward the lower groove 1113.

In this case, the receiving terminal 1400, the second portion 1520 of the fastening member 1500, and the supply terminal 1310 may be physically or electrically connected to one another. Therefore, power may be supplied from the battery 1300 to the receiving terminal 1400 through the fastening member 1500. Also, the second portion 1520 may press the battery 1300 toward the coupling space and the second extension. Accordingly, the fastening member 1500 may also perform the role of fixing the battery 1300 to the body 1100.

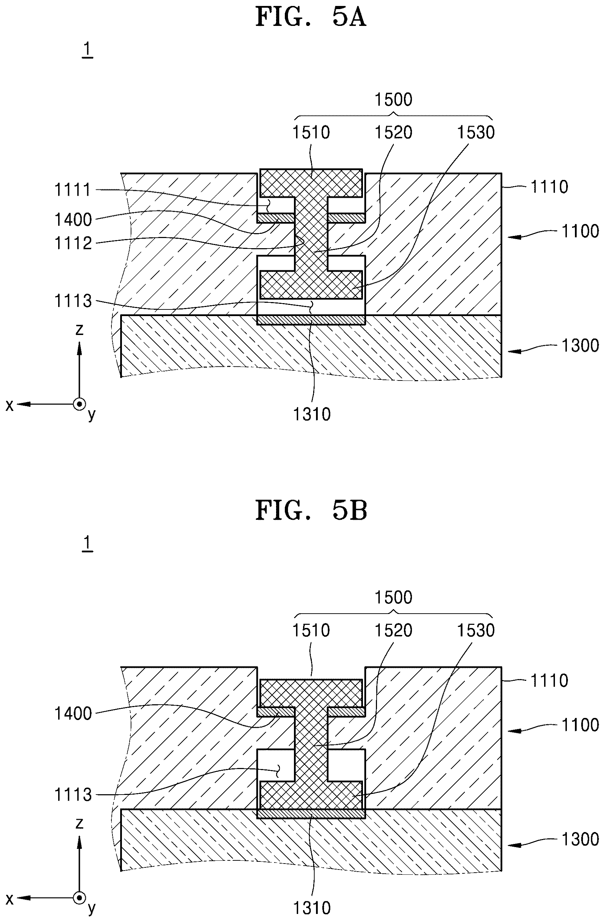

FIG. 5A is a cross-sectional view of a first state of a fastening member and a body, applicable to an aerosol generating device, according to another embodiment. FIG. 5B is a cross-sectional view of a second state of the battery and the body of FIG. 5A.

Referring to FIGS. 5A and 5B, the aerosol generating device 1 according to another embodiment may include the body 1100, the battery 1300, the receiving terminal 1400, and the fastening member 1500.

At least one of the components of the aerosol generating device 1 shown in FIGS. 5A and 5B may be identical or similar to at least one of the components of the aerosol generating device 1 shown in FIGS. 4A and 4B, and any redundant description will be omitted below.

The fastening member 1500 may include the first portion 1510 accommodated in the upper groove 1111, the second portion 1520 having a diameter smaller than that of the first portion 1510, extending from the first portion 1510, and penetrating through the first extension 1110, and a third portion 1530 having a diameter greater than that of the second portion 1520 and accommodated in the lower groove 1113.

The first portion 1510 placed in the upper groove 1111 and the third portion 1530 placed in the lower groove 1113 may be placed parallel to each other. The second portion 1520 may connect the first portion 1510 and the third portion 1530. The length of the second portion 1520 is greater than the length of the through hole 1112, and thus the fastening member 1500 may move along the through hole 1112 in the direction in which the through hole 1112 extends (e.g., in the z-axis direction).

Unlike in FIGS. 4A and 4B, the third portion 1530 of the fastening member 1500 may be blocked by the bottom surface of the lower groove 1113, and thus movement of the fastening member 1500 in the +z direction may be restricted. Therefore, even when a separate elastic member (e.g., the elastic member 1600 of FIGS. 4A and 4B) is not arranged, the third portion 1530 may prevent the fastening member 1500 from being separated from the first extension 1110.

Also, since the diameter of the third portion 1530 is greater than that of the second portion 1520, an area in which the fastening member 1500 comes into contact with the supply terminal 1310 of the battery 1300 may increase. In terms of power supply, when the area in which the fastening member 1500 comes into contact with the supply terminal 1310 increases, even when a problem occurs in a region of the supply terminal 1310, another region of the supply terminal 1310 may normally transmit power to the fastening member 1500. Therefore, power may be normally supplied, and thus the aerosol generating device 1 may operate normally.

Also, from the perspective of coupling the battery 1300 to the body 1100, since the range in which the fastening member 1500 presses the battery 1300 is widened, the fastening member 1500 may effectively fix the battery 1300 to the body 1100 using the third portion 1530.

Referring to FIG. 5A, a first state in which the fastening member 1500 does not contact the supply terminal 1310 of the battery 1300 is shown. Here, the first portion 1510 of the fastening member 1500 may be placed outside the upper groove 1111. The second portion 1520 of the fastening member 1500 is accommodated in the upper groove 1111 and may penetrate through the through hole 1112 and be exposed in the lower groove 1113. The third portion 1530 of the fastening member 1500 is accommodated in the lower groove 1113, but may not come into contact with the supply terminal 1310 of the battery 1300.

The receiving terminal 1400 arranged on the bottom surface of the upper groove 1111 may come into contact with the second portion 1520. Although the battery 1300 has the supply terminal 1310 exposed toward the lower groove 1113, the third portion 1530 does not contact the supply terminal 1310, and thus power is not supplied from the battery 1300 to the receiving terminal 1400.

Referring to FIG. 5B, a second state in which the fastening member 1500 is contacting the supply terminal 1310 of the battery 1300 is shown. Here, the first portion 1510 of the fastening member 1500 may be entirely accommodated in the upper groove 1111 and may come into contact with the receiving terminal 1400. The second portion 1520 has moved in the -z direction, as compared to the first state. However, since the first portion 1510 is blocked by the bottom surface of the upper groove 1111, the movement of the fastening member 1500 in the -z direction may be restricted. The third portion 1530 of the fastening member 1500 may partially protrude from the lower groove 1113 and come into contact with the supply terminal 1310 of the battery 1300.

In this case, the receiving terminal 1400, the third portion 1530 of the fastening member 1500, and the supply terminal 1310 may be physically or electrically connected to one another. Therefore, power may be supplied from the battery 1300 to the receiving terminal 1400 through the fastening member 1500.

In detail, power may be supplied sequentially from the supply terminal 1310 to the receiving terminal 1400 sequentially through the third portion 1530 and the second portion 1520. When the first portion 1510 includes a conductive material, power may also be supplied to the receiving terminal 1400 through the first portion 1510.

Also, the third portion 1530 may press the battery 1300 toward the coupling space (e.g., the coupling space 1100c of FIG. 2) and the second extension. Accordingly, the fastening member 1500 may also perform the role of fixing the battery 1300 to the body 1100.

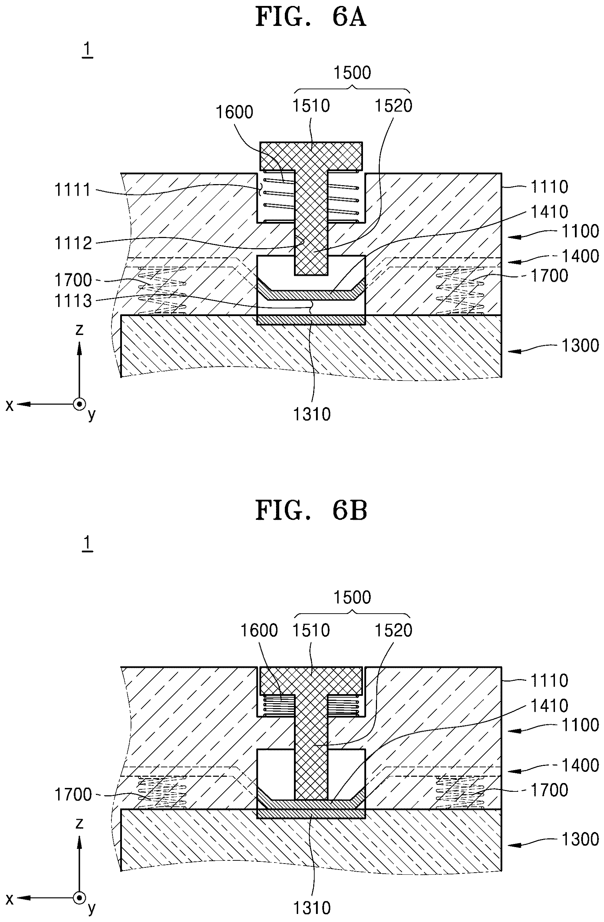

FIG. 6A is a cross-sectional view of a first state of a fastening member and a body, applicable to an aerosol generating device, according to another embodiment. FIG. 6B is a cross-sectional view of a second state of the battery and the body of FIG. 6A.

Referring to FIGS. 6A and 6B, the aerosol generating device 1 according to an embodiment may include the body 1100, the battery 1300, the receiving terminal 1400, the fastening member 1500, a first elastic member 1600, and a second elastic member 1700.

At least one of the components of the aerosol generating device 1 shown in FIGS. 6A and 6B may be identical or similar to at least one of the components of the aerosol generating device 1 shown in FIGS. 4A and 4B, and any redundant description will be omitted below.

Unlike the receiving terminal described above, the receiving terminal 1400 shown in FIGS. 6a and 6b is not arranged on the bottom surface of the upper groove 1111. The receiving terminal 1400 may be arranged in a direction across the lower groove 1113 (e.g., in the x-axis direction). Both ends of the receiving terminal 1400 may be inserted into the interior of the first extension 1110 through the inner surface of the lower groove 1113, and a center portion of the receiving terminal 1400 may be placed in the lower groove 1113.

A portion of the receiving terminal 1400 arranged in the lower groove 1113 may protrude toward the coupling space (e.g., the coupling space 1100c of FIG. 2) or in a direction in which the lower groove 1113 is opened (e.g., the -z direction). At this time, a protruding portion 1410 of the receiving terminal 1400 may be pressd by the fastening member 1500 penetrating through the first extension 1110. By pressing the protruding portion 1410, the receiving terminal 1400 may come into contact with the supply terminal 1310 of the battery 1300.

Referring to FIG. 6A, a first state in which the receiving terminal 1400 does not contact the supply terminal 1310 of the battery 1300 is shown. Here, the first portion 1510 of the fastening member 1500 may be placed outside the upper groove 1111. The second portion 1520 of the fastening member 1500 is accommodated in the upper groove 1111 and may penetrate through the through hole 1112 and be exposed in the lower groove 1113.

The receiving terminal 1400 arranged to penetrate through the lower groove 1113 does not come into contact with the second portion 1520 in the first state, but may come into contact with the second portion 1520 as the fastening member 1500 moves in the z-axis direction. However, when the receiving terminal 1400 is not in contact with the supply terminal 1310, power is not supplied from the battery 1300 to the receiving terminal 1400.

Referring to FIG. 6B, a second state in which the receiving terminal 1400 is contacting the supply terminal 1310 of the battery 1300 is shown. Here, the first portion 1510 of the fastening member 1500 may be completely accommodated in the upper groove 1111. The second portion 1520 may press the protruding portion 1410 of the receiving terminal 1400 positioned in the lower groove 1113 as a result of moving in the z-axis direction to bring the protruding portion 1410 into contact with the supply terminal 1310 of the battery 1300 exposed toward the lower groove 1113.

In this case, the receiving terminal 1400 and the supply terminal 1310 may be physically or electrically connected. In other words, power may be supplied from the battery 1300 to the receiving terminal 1400 by making contact between the receiving terminal 1400 and the supply terminal 1310 by the fastening member 1500. Also, the second portion 1520 of the fastening member 1500 may press the battery 1300 toward the coupling space and the second extension by pressing the protruding portion 1410 of the receiving terminal 1400. Accordingly, the fastening member 1500 may also perform the role of fixing the battery 1300 to the body 1100.

Meanwhile, in terms of power supply, the fastening member 1500 of FIGS. 6A and 6B simply serves to press the receiving terminal 1400, and thus the fastening member 1500 does not necessarily include a material having electrical conductivity.

Referring to FIGS. 6A and 6B, the first elastic member 1600 is identical to the elastic member described above (e.g., the elastic member 1600 of FIGS. 4A and 4B), and the aerosol generating device 1 according to another embodiment may further include the second elastic member 1700 that supports the receiving terminal 1400.

The second elastic member 1700 is inserted into the interior of the first extension 1110 and may be below the receiving terminal 1400 to support both ends of the receiving terminal 1400 penetrating through the lower groove 1113. As shown in the drawings, two second elastic members 1700 are arranged, but embodiments are not limited to the number of the second elastic members 1700.

When the protruding portion 1410 of the receiving terminal 1400 is pressd by the second portion 1520 of the fastening member 1500, not only the protruding portion 1410, but also the entire receiving terminal 1400 may move in the pressd direction (e.g., -z direction). At this time, the second elastic member 1700 is compressed according to the movement of the receiving terminal 1400, and an elastic force may be applied to the receiving terminal 1400 in a direction opposite to the direction in which the second elastic member 1700 is compressed (e.g., in the +z direction).

In the second state where the fastening member 1500 is completely coupled to the first extension 1110, the receiving terminal 1400 is unable to move in the direction in which the elastic force is applied despite the elastic force of the second elastic member 1700. When the pressing of the fastening member 1500 on the receiving terminal 1400 is released, the receiving terminal 1400 may move to its original position (e.g., the position of the receiving terminal in the first state) by the elastic force of the second elastic member 1700.

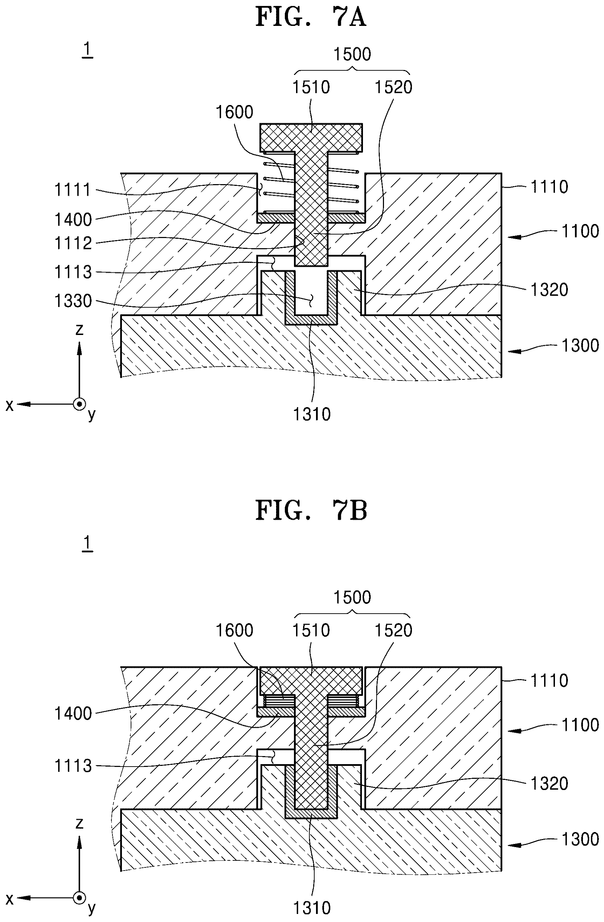

FIG. 7A is a cross-sectional view of a first state of a fastening member and a body, applicable to an aerosol generating device, according to another embodiment. FIG. 7B is a cross-sectional view of a second state of the battery and the body of FIG. 7A.

Referring to FIGS. 7A and 7B, the aerosol generating device 1 according to another embodiment may include the body 1100, the battery 1300, the receiving terminal 1400, the fastening member 1500, and the elastic member 1600.

At least one of the components of the aerosol generating device 1 shown in FIGS. 7A and 7B may be identical or similar to at least one of the components of the aerosol generating device 1 shown in FIGS. 4A and 4B, and any redundant description will be omitted below.

The battery 1300 may include a convex portion 1320 accommodated in the lower groove 1113. The convex portion 1320 may include a shape corresponding to that of the lower groove 1113. Therefore, the battery 1300 may be primarily coupled to the body 1100 by inserting the convex portion 1320 into the lower groove 1113.

At this time, the supply terminal 1310 may be placed on one surface of the convex portion 1320 facing the bottom surface of the lower groove 1113. Therefore, when the fastening member 1500 moves in the z-axis direction, the fastening member 1500 may transmit power by contacting the supply terminal 1310 arranged in the convex portion 1320. Also, the battery 1300 may be secondarily coupled to and fixed to the body 1100 by the fastening member 1500 pressing the convex portion 1320 toward the second extension.

The battery 1300 may further include a coupling groove 1330 that allows insertion of the fastening member 1500 penetrating through the first extension 1110 from the upper groove 1111. The coupling groove 1330 is a component that may be arranged in the battery 1300 regardless of the presence or the absence of the lower groove 1113 and the convex portion 1320. However, below, descriptions will focus on an embodiment in which the coupling groove 1330 is positioned on the convex portion 1320.

The coupling groove 1330 may be opened toward the lower groove 1113 or the through hole 1112. At this time, the supply terminal 1310 may be arranged on the inner circumferential surface of the coupling groove 1330. The second portion 1520 of the fastening member 1500 may be coupled to the coupling groove 1330 through various methods such as a forced fit, screw coupling, or magnetic coupling.

Referring to FIG. 7A, a first state in which the fastening member 1500 does not contact the supply terminal 1310 of the battery 1300 is shown. Here, the first portion 1510 of the fastening member 1500 may be placed outside the upper groove 1111. The second portion 1520 of the fastening member 1500 may penetrate through the through hole 1112 and be exposed in the lower groove 1113.

The receiving terminal 1400 arranged on the bottom surface of the upper groove 1111 may come into contact with the second portion 1520. The coupling groove 1330 positioned in the convex portion 1320 inserted into the lower groove 1113 is exposed toward the lower groove 1113, but, since the second portion 1520 is not inserted into the coupling groove 1330 and does not come into contact with the supply terminal 1310, power is not supplied from the battery 1300 to the receiving terminal 1400.

Referring to FIG. 7B, a second state in which the fastening member 1500 is contacting the supply terminal 1310 of the battery 1300 is shown. Here, the first portion 1510 of the fastening member 1500 may be completely accommodated in the upper groove 1111. The second portion 1520 may be fully inserted into the coupling groove 1330 arranged in the convex portion 1320 and come into contact with the supply terminal 1310 of the battery 1300.

In this case, the receiving terminal 1400, the second portion 1520 of the fastening member 1500, and the supply terminal 1310 may be physically or electrically connected to one another. Therefore, power may be supplied from the battery 1300 to the receiving terminal 1400 through the fastening member 1500.

Also, the second portion 1520 may press the battery 1300 toward the coupling space (e.g., the coupling space 1100c of FIG. 2) and the second extension. In addition to the 'primary coupling in which the convex portion 1320 is coupled to the lower groove 1113' and the 'secondary coupling in which the second portion 1520 is coupled to the coupling groove 1330,' triple fixation of the battery 1300 to the body 1100 may be realized due to the pressing of the second portion 1520 to the battery 1300.

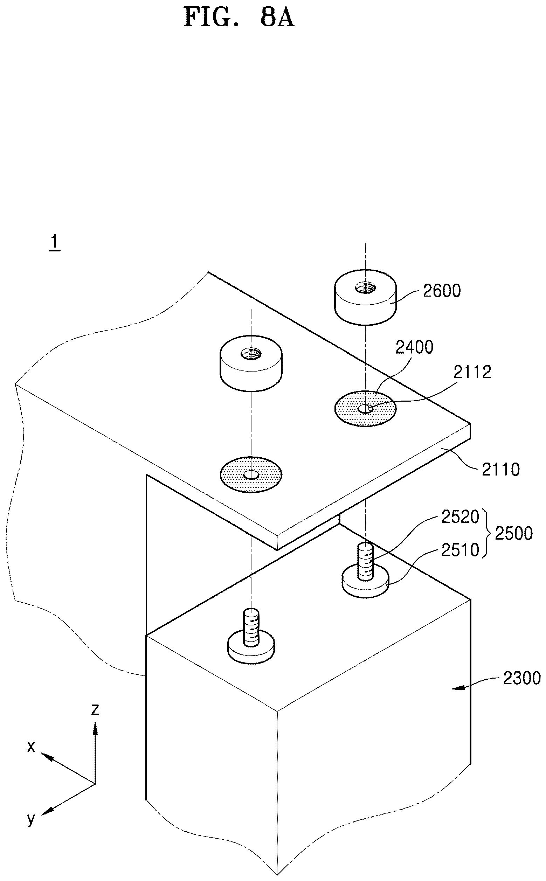

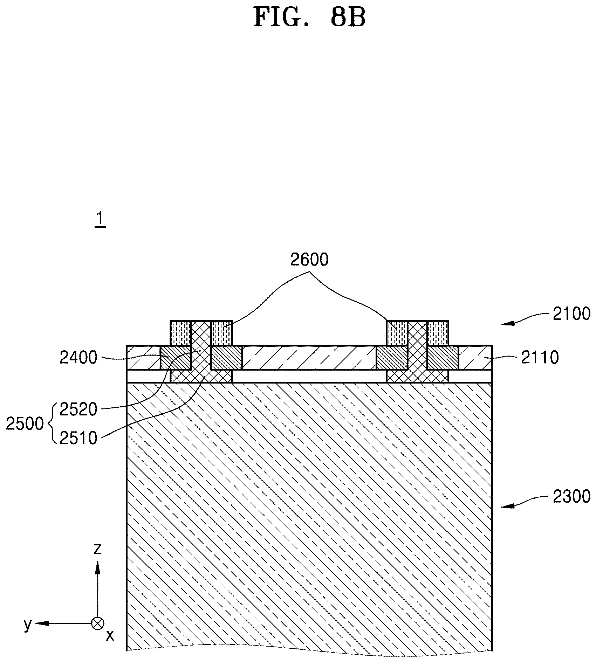

FIG. 8A is an exploded perspective view of a fastening member and surrounding components applicable to an aerosol generating device, according to another embodiment. FIG. 8B is a cross-sectional view of an assembly of the fastening member and the surrounding components of FIG. 8A.

Referring to FIGS. 8A and 8B, the aerosol generating device 1 according to another embodiment may include a body 2100, a battery 2300, a receiving terminal 2400, a fastening member 2500, and a coupling ring 2600.

At least one of the components of the aerosol generating device 1 shown in FIGS. 8A and 8B may be identical or similar to at least one of the components of the aerosol generating device 1 of FIGS. 2 and 3A, and any redundant description will be omitted below.

A first extension 2110 of the body 2100 may not have separate upper groove and lower groove. However, the first extension 2110 may include a through hole 2112 through which the fastening member 2500 may pass. The receiving terminal 2400 may be placed around the through hole 2112. For example, the receiving terminal 2400 may be arranged along the inner circumferential surface of the through hole 2112.

The battery 2300 may not have a separate supply terminal. Instead of a supply terminal, the fastening member 2500 may be coupled to the battery 2300 to perform the function of a supply terminal. In other words, the fastening member 2500 may transmit power by coupling the battery 2300 to the first extension 2110 of the body 2100 and, at the same time, contacting the receiving terminal 2400 arranged in the through hole 2112.

The fastening member 2500 may fix the battery 2300 to the body 2100 by having a portion coupled to a portion of the battery 2300 and the other portion penetrating through the first extension 2110 and being fixed to the body 2100.

In detail, the fastening member 2500 may include a head portion 2510 combined with an outer surface of the battery 2300, and a body portion 2520 having a diameter smaller than the diameter of the head portion 2510 and extending from the head portion 2510 and penetrating through a portion (e.g., a through hole 2112) of a first extension 2110.

According to embodiments, the head portion 2510 may be inserted into the battery 2300. In this case, only the body portion 2520 of the fastening member 2500 may protrude from the battery 2300.

The body portion 2520 may be force-fitted into the through hole 2112, but embodiments are not limited thereto. When the fastening member 2500 is inserted into the through hole 2112 of the first extension 2110, a portion of the body portion 2520 may protrude in the +z direction from the first extension 2110. The coupling ring 2600 may be coupled to a region of the body portion 2520 to couple the fastening member 2500 to the first extension 2110.

For example, the fastening member 2500 and the coupling ring 2600 may each include a bolt structure and a nut structure, respectively. At this time, the inner diameter of the coupling ring 2600 has a size corresponding to the diameter of the body portion 2520, and the outer diameter of the coupling ring 2600 may be greater than the inner diameter of the through hole 2112. The coupling ring 2600 may rotate with respect to the body portion 2520 to press the first extension 2110 in the -z direction.

By pressing the first extension 2110 toward the head portion 2510 of the fastening member 2500 by the coupling ring 2600, the fastening member 2500 may be firmly fixed to the first extension 2110. Since the fastening member 2500 is coupled to the battery 2300, the battery 2300 may be firmly fixed to the body 2100.

At the same time, the receiving terminal 2400 may be arranged to surround a portion of the body portion 2520 passing through the first extension 2110 or the through hole 2112. The fastening member 2500 that functions as a supply terminal may supply power to internal components of the body 2100 by contacting the receiving terminal 2400 arranged in the through hole 2112 using the body portion 2520.

Meanwhile, although not shown in the drawings, it may be easily understood by one of ordinary skill in the art that the receiving terminal 2400, the fastening member 2500, and surrounding components thereof may be equally applied to the second extension as well as the first extension 2110 as needed. For convenience of explanation, the following explanation will focus on components arranged at the first extension 2110.

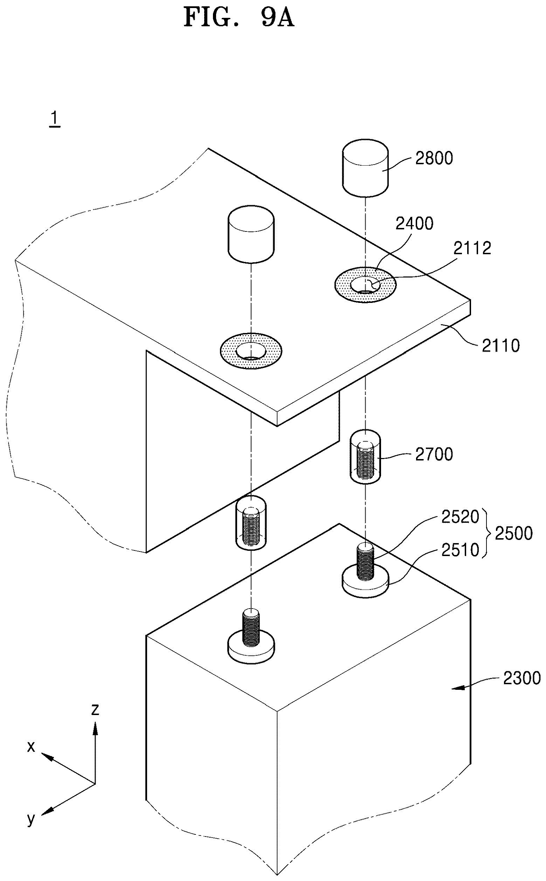

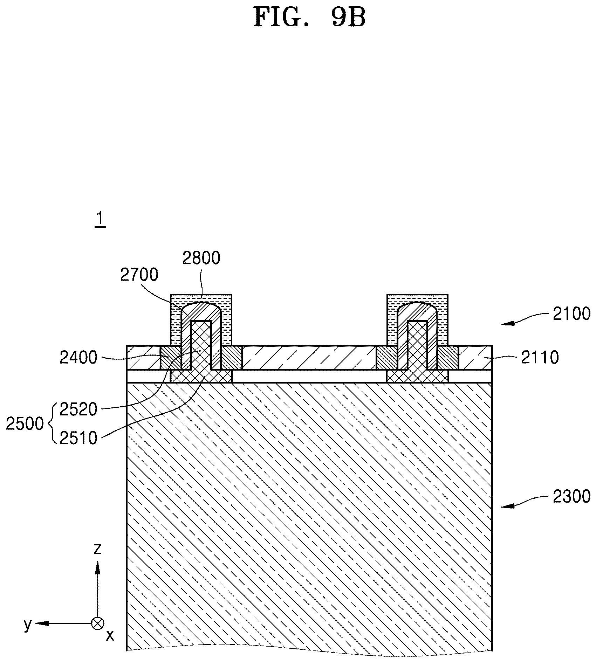

FIG. 9A is an exploded perspective view of a fastening member and surrounding components applicable to an aerosol generating device, according to another embodiment. FIG. 9B is a cross-sectional view of an assembly of the fastening member and the surrounding components of FIG. 9A.

Referring to FIGS. 9A and 9B, the aerosol generating device 1 according to another embodiment may include the body 2100, the battery 2300, the receiving terminal 2400, the fastening member 2500, a first cover 2700, and a second cover 2800.

At least one of the components of the aerosol generating device 1 shown in FIGS. 9A and 9B may be identical or similar to at least one of the components of the aerosol generating device 1 of FIGS. 8A and 8B, and any redundant description will be omitted below.

The first cover 2700 is an electrically conductive component that surrounds the body portion 2520 of the fastening member 2500 and penetrates through a region (e.g., the through hole 2112) of the first extension 2110. In other words, unlike in FIGS. 8A and 8B where only the fastening member 2500 passes through the through hole 2112, in FIGS. 9A and 9B, the fastening member 2500 and the first cover 2700 surrounding the same may pass through the through hole 2112. Accordingly, the diameter of the through hole 2112 may be greater than the diameter of the through hole of FIG. 8A and FIG. 8B through which only the fastening member 2500 passes. Here, the first cover 2700 may be force-fitted into the through hole 2112, but embodiments are not limited thereto.

The method of coupling the fastening member 2500 to the first cover 2700 is not limited to a specific method. As shown in the drawings, screw threads are arranged on the outer circumferential surface of the body portion 2520 and the inner circumferential surface of the first cover 2700, and thus the fastening member 2500 and the first cover 2700 may be screw-coupled. According to another embodiment, the body portion 2520 of the fastening member 2500 may be force-fitted into the interior of the first cover 2700. According to another embodiment, the body portion of the fastening member 2500 may be magnetically coupled to the interior of the first cover 2700.

As shown in FIGS. 8A and 8B, the receiving terminal 2400 may be placed around the through hole 2112. Receiving terminals 2400 may be arranged along the inner circumferential surface of the through hole 2112. The receiving terminal 2400 may be arranged to surround a portion of the first cover 2700 passing through the first extension 2110 or the through hole 2112.

Instead of a supply terminal of the battery 2300, the fastening member 2500 may be coupled to the battery 2300 to perform the function of a supply terminal. At this time, since the first cover 2700 including an electrically conductive material surrounds the body portion 2520 of the fastening member 2500, the first cover 2700 may transmit power by simultaneously coupling the battery 2300 to the first extension 2110 of the body 2100 and contacting the receiving terminal 2400 arranged in the through hole 2112.

When the first cover 2700 is inserted into the through hole 2112 of the first extension 2110, a portion of the first cover 2700 may protrude in the +z direction from the first extension 2110. The second cover 2800 may be coupled to cover a region of the first cover 2700 to couple the fastening member 2500 to the first extension 2110.

As shown in the drawings, the first cover 2700 may be force-fitted into the interior of the second cover 2800, but embodiments are not limited thereto. The first cover 2700 may be coupled to the interior of the second cover 2800 in various ways. The inner diameter of the second cover 2800 has a size corresponding to the diameter of the first cover 2700, and the outer diameter of the second cover 2800 may be greater than the inner diameter of the through hole 2112. The second cover 2800 in which the first cover 2700 is inserted may contact the first extension 2110 and press the first extension 2110 in the -z direction.

As the second cover 2800 is positioned above a region of the first extension 2110 in which the through hole 2112 is positioned and presses the first extension 2110 toward the head portion 2510 of the fastening member 2500, the fastening member 2500 and the first cover 2700 may be firmly fixed to the first extension 2110. Since the fastening member 2500 is coupled to the battery 2300, the battery 2300 may be firmly fixed to the body 2100.

At the same time, the receiving terminal 2400 may be arranged to surround a portion of the first cover 2700 passing through the first extension 2110 or the through hole 2112. The fastening member 2500 that functions as a supply terminal contacts the first cover 2700 using the body portion 2520, and the first cover 2700 that has electrical conductivity may supply power to internal components of the body 2100 by contacting the receiving terminal 2400 that is arranged in the through hole 2112.

According to an aerosol generating device according to embodiments, a battery may be coupled to a body by using a component called a fastening member while performing the function of a terminal for supplying power, and thus the internal space of the aerosol generating device may be used efficiently.

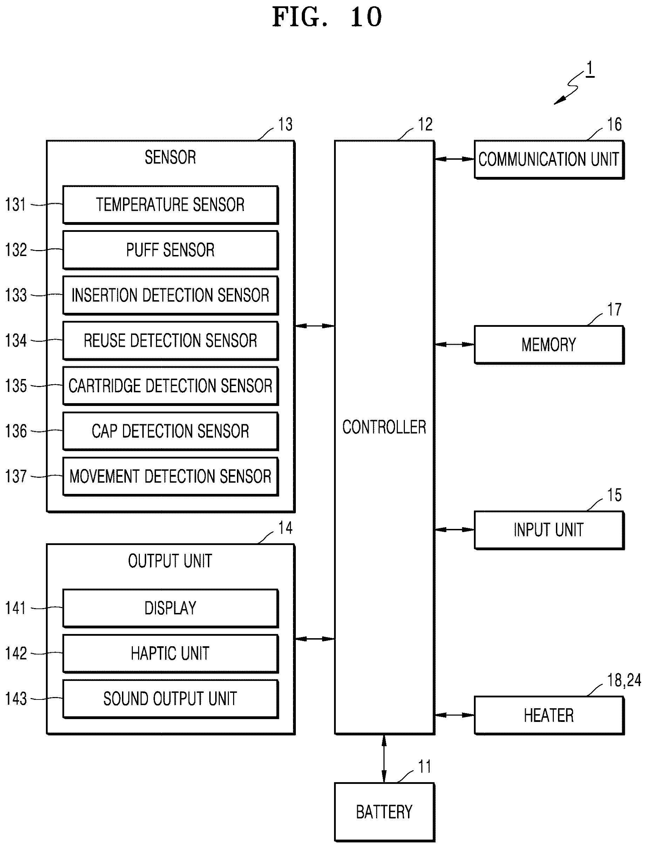

FIG. 10 is a block diagram of an aerosol generating device according to another embodiment of the present disclosure.

An aerosol generating device 1 may include a power source 11, a controller 12, a sensor 13, an output unit 14, an input unit 15, a communication unit 16, a memory 17, and one or more heaters 18 or 24. However, an internal structure of the aerosol generating device 1 is not limited to the illustration of FIG. 10. That is, it may be understood by those skilled in the art that some of the components shown in FIG. 10 may be omitted or new components may be added, according to the design of the aerosol generating device 1.

The sensor 13 may sense a state of the aerosol generating device 1 or a state of the surroundings of the aerosol generating device 1 and may transmit information corresponding to the sensed state to the controller 12. The controller 12 may control the aerosol generating device 1 so that various functions, such as operation control of the cartridge heater 24 and/or the heater 18, smoking restrictions, determination as to whether the stick S and/or the cartridge 19 is inserted, and an alarm display, may be performed, based on the information corresponding to the sensed state.

The sensor 13 may include at least one of a temperature sensor 131, a puff sensor 132, an insertion detection sensor 133, a reuse detection sensor 134, a cartridge detection sensor 135, a cap detection sensor 136, and a movement detection sensor 137.

The temperature sensor 131 may detect a temperature at which the cartridge heater 24 and/or the heater 18 is heated. The aerosol generating device 1 may include a separate temperature sensor for detecting the temperature of the cartridge heater 24 and/or the heater 18, or the cartridge heater 24 and/or the heater 18 may serve as a temperature sensor.

The temperature sensor 131 may output a signal corresponding to the cartridge heater 24 and/or the heater 18. For example, the temperature sensor 131 may include a resistor element of which resistance value changes according to a change in the temperature of the cartridge heater 24 and/or the heater 18. The temperature sensor 131 may be implemented by a thermistor, etc. which is an element using a property in which resistance changes according to a temperature. In this case, the temperature sensor 131 may output a signal corresponding to the resistance value of the resistor element as a signal corresponding to the temperature of the cartridge heater 24 and/or the heater 18. For example, the temperature sensor 131 may include a sensor for detecting the resistance value of the cartridge heater 24 and/or the heater 18. In this case, the temperature sensor 131 may output the signal corresponding to the resistance value of the cartridge heater 24 and/or the heater 18 as a signal corresponding to the temperature of the cartridge heater 24 and/or the heater 18.

The temperature sensor 131 may be disposed around the battery 11 to monitor a temperature of the battery 11. The temperature sensor 131 may be disposed adjacent to the battery 11. For example, the temperature sensor 131 may be attached to one surface of a power source, which is the battery 11. For example, the temperature sensor 131 may be mounted on one surface of a printed circuit board.

The temperature sensor 131 may be disposed inside the body 10 to detect an internal temperature of the body 10.

The puff sensor 132 may detect the user's puff, based on various physical changes in an airflow path. The puff sensor 132 may output a signal corresponding to the puff. For example, the puff sensor 132 may be a pressure sensor. The puff sensor 132 may output a signal corresponding to internal pressure of the aerosol generating device. The internal pressure of the aerosol generating device 1 may correspond to pressure of the airflow path on which gas flows. The puff sensor 132 may be disposed to correspond to the airflow path on which gas flows, in the aerosol generating device 1.

The insertion detection sensor 133 may detect insertion and/or removal of the stick S. The insertion detection sensor 133 may detect signal changes relating to insertion and/or removal of the stick S. The insertion detection sensor 133 may be installed around an insertion space. The insertion detection sensor 133 may detect insertion and/or removal of the stick S according to changes in dielectric constants inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, when a magnetic field changes around a coil through which a current flows, the characteristics of the current flowing through the coil may be changed according to the Faraday's law. The characteristics of the current flowing through the coil may include a frequency of an alternating current, a current value, a voltage value, an inductance value, an impedance value, etc.

The inductive sensor may output signals corresponding to the characteristics of the current flowing through the coil. For example, the inductive sensor may output signals corresponding to the inductance value of the coil.

The capacitance sensor may include a conductor. The conductor of the capacitance sensor may be disposed adjacent to the insertion space. The capacitance sensor may output a signal corresponding to an electromagnetic characteristic of the surroundings, for example, an electrostatic capacitance around the conductor. For example, when the stick S including a wrapper made of a metal material is inserted into the insertion space, the electromagnetic properties around the conductor may be changed by the wrapper of the stick S.

The reuse detection sensor 134 may detect whether the stick S is reused. The reuse detection sensor 134 may be a color sensor. The color sensor may detect a color of the stick S. The color sensor may detect a color of a portion of the wrapper surrounding the outside of the stick S. The color sensor may detect values for optical characteristics corresponding to the color of an object, based on light reflected by the object. For example, the optical characteristics may be a wavelength of the light. The color sensor may be implemented as a single component with the proximity sensor, or may be implemented as a separate component distinct from the proximity sensor.

A color of at least a portion of the wrapper that constitutes the stick S may be changed by aerosol. In case where the stick S is inserted into the insertion space, the reuse detection sensor 134 may be disposed to correspond to a location in which at least a portion of the wrapper of which color is changed by aerosol. For example, before the stick S is used by the user, the color of at least the portion of the wrapper may be a first color. In this case, as at least a portion of the wrapper is wet by aerosol generated by the aerosol generating device 1 while the aerosol is passing through the stick S, the color of the at least a portion of the wrapper may be changed to a second color. The color of the at least a portion of the wrapper may be maintained as the second color after being changed from the first color to the second color.

The cartridge detection sensor 135 may detect insertion and/or removal of the cartridge 19. The cartridge detection sensor 135 may be implemented by an inductance-based sensor, a capacitive sensor, a resistance sensor, a hall sensor (hall IC) using a hall effect, etc.

The cap detection sensor 136 may detect mounting and/or removal of a cap. When the cap is separated from the body 10, a portion of the cartridge 19 and the body 10 covered by the cap may be exposed to the outside. The cap detection sensor 136 may be implemented by a contact sensor, a hall sensor (hall IC), an optical sensor, etc.

The movement detection sensor 137 may detect a movement of the aerosol generating device. The movement detection sensor 137 may be implemented with at least one of an acceleration sensor and a gyro sensor.

The sensor 13 may further include at least one of a humidity sensor, a barometric pressure sensor, a magnetic sensor, a global positioning sensor (GPS), and a proximity sensor, in addition to the above-described sensors 131 through 137. Functions of the sensors would be instinctively understood by one of ordinary skill in the art in view of their names and thus detailed descriptions thereof will be omitted herein.

The output unit (output interface) 14 may output information about the state of the aerosol generating device 1 and may provide the information to the user. The output unit 14 may include at least one of a display 141, a haptic unit 142, and a sound output unit 143, but embodiments are not limited thereto. When the display 141 forms a layer structure together with a touch pad to construct a touch screen, the display 141 may be used as an input device as well as an output device.

The display 141 may visually provide information about the aerosol generating device 1 to the user. For example, the information about the aerosol generating device 1 may refer to various pieces of information, such as the charging/discharging state of the battery 11 of the aerosol generating device 1, a preheating state of the heater 18, an insertion/removal state of the stick S and/or the cartridge 19, a mounting/removal state of the cap, or a state in which use of the aerosol generating device 1 is limited (e.g., detection of an abnormal article), and the display 141 may output the information to the outside. For example, the display 141 may have a shape of a light-emitting diode (LED). For example, the display 141 may be a liquid crystal display (LCD), an organic light-emitting display (OLED) panel, or the like.

The haptic unit 142 may convert an electrical signal into a mechanical stimulus or electrical stimulus and may tactually provide information about the aerosol generating device 1 to the user. For example, when initial power is supplied to the cartridge heater 24 and/or the heater 18 for a set time, the haptic unit 142 may generate vibration corresponding to completion of initial preheating. The haptic unit 142 may include a motor, a piezoelectric element, and/or an electrical stimulation device.

The sound output unit 143 may acoustically provide the information about the aerosol generating device 1 to the user. For example, the sound output unit 143 may convert the electrical signal into a sound signal and may output the sound signal to the outside.

The battery 11 may supply power used to operate the aerosol generating device 1. The battery 11 may supply power so that the cartridge heater 24 and/or the heater 18 may be heated. In addition, the battery 11 may supply power required for operations of the sensor 13, the output unit 14, the input unit 15, the communication unit 16, and the memory 17, which are other components provided in the aerosol generating device 1. The battery 11 may be a rechargeable power source or a disposable power source. For example, the battery 11 may be a lithium polymer (LiPoly) battery, but embodiments are not limited thereto.

The battery 11 may be a removable type (detachable or separable) power source. The battery 11 includes an electrical contact portion, and when the battery 11 is mounted in the aerosol-generating device 1, the electrical contact portion of the battery 11 may be implemented to be electrically connected to an electrical contact portion provided in the aerosol-generating device 1 to supply power to the aerosol-generating device 1. As another example, the battery 11 may include a charging coil for supplying power to the aerosol-generating device 1 in a wireless charging manner instead of a separate electrical contact portion. That is, the power supply method of the battery 11 may vary, and the electrical connection method of the battery 11 and the aerosol-generating device 1 may vary depending on the power supply method supported by the battery 11.

The detachable battery 11 may include a charger interface that may be connected to an external charger. Power for charging the detachable battery 11 may be provided to the battery 11 through the charger interface. The battery 11 may be charged by the external charger while being coupled to the aerosol-generating device 1 or while being separated from the aerosol-generating device 1.

Although not shown in FIG. 10, the aerosol generating device 1 may further include a battery protection circuit. The battery protection circuit may be electrically connected to the battery 11 and may include a switching element.

The battery protection circuit may cut off an electric path for the battery 11 according to certain conditions. For example, when a voltage level of the battery 11 is greater than or equal to a first voltage corresponding to overcharging, the battery protection circuit may cut off the electric path for the battery 11. For example, when a voltage level of the battery 11 is less than a second voltage corresponding to overdischarging, the battery protection circuit may cut off the electric path for the battery 11.

The heater 18 may heat a medium or an aerosol generating material in the stick S by receiving power from the battery 11. Although not shown in FIG. 10, the aerosol generating device 1 may further include a power conversion circuit (e.g., a DC/DC converter) for converting power of the battery 11 to supply the converted power to the cartridge heater 24 and/or the heater 18. In addition, when the aerosol generating device 1 generates aerosol by using an induction heating method, the aerosol generating device 1 may further include a DC/AC converter that converts direct current power of the battery 11 into alternating current power.

The controller 12, the sensor 13, the output unit 14, the input unit 15, the communication unit 16, and the memory 17 may perform functions by receiving power from the battery 11. Although not shown in FIG. 10, the aerosol generating device 1 may further include a power conversion circuit for converting the power of the battery 11 to supply the converted power to components, for example, a low dropout (LDO) circuit or a voltage regulator circuit. Although not shown in FIG. 10, a noise filter may be provided between the battery 11 and the heater 18. The noise filter may be a low pass filter. The low pass filter may include at least one inductor and a capacitor. A cutoff frequency of the low pass filter may correspond to a frequency of a radio frequency switching current applied from the battery 11 to the heater 18. Radio frequency noise components may be prevented from being applied to the sensor 13, such as the insertion detection sensor 133, by the low pass filter.

According to an embodiment, the cartridge heater 24 and/or the heater 18 may be formed of an arbitrary proper electric resistance material. For example, the proper electric resistance material may be metal or metal alloy including titanium, zirconium, tantalum, platinum, nickel, cobalt, chromium, hafnium, niobium, molybdenum, tungsten, tin, gallium, manganese, iron, copper, stainless steel, nichrome, etc., but embodiments are not limited thereto. Also, the heater 18 may be implemented using a metal heating wire, a metal heating plate on which an electric conductive track is disposed, a ceramic heating body, or the like, but embodiments are not limited thereto.

According to another embodiment, the heater 18 may be a heater using an induction heating method. For example, the heater 18 may include a susceptor that generates heat by a magnetic field applied by the coil and heats the aerosol generating material.

The input unit (input interface) 15 may receive information input from the user or may output the information to the user. For example, the input unit 15 may be a touch panel. The touch panel may include at least one touch sensor that detects touch. For example, the touch sensor may include a capacitive touch sensor, a resistive touch sensor, a surface acoustic wave touch sensor, an infrared touch sensor, or the like, but embodiments are not limited thereto.

The display 141 and the touch panel may be implemented as one panel. For example, the touch panel may be inserted (on-cell type or in-cell type) into the display 141. For example, the touch panel may be added on (add-on type) the display panel.

The input unit 15 may include a button, a key pad, a dome switch, a jog wheel, a jog switch, or the like, but embodiments are not limited thereto.

The memory 17 is hardware for storing various kinds of data processed in the aerosol generating device 1, and may store pieces of data that have been processed and are to be processed by the controller 12. The memory 17 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The memory 17 may store data about the operating time of the aerosol generating device 1, a maximum number of puffs, a current number of puffs, at least one temperature profile, and the user's smoking pattern.

The communication unit (communication interface, communicator) 16 may include at least one component for communication with other electronic devices. For example, the communication unit 16 may include at least one of a short-range wireless communication unit and a wireless communication unit.

Examples of the short-range wireless communication unit may include, but are not limited to, a Bluetooth communication unit, a Bluetooth Low Energy (BLE) communication unit, a near field communication (NFC) unit, a wireless local area network (WLAN) (e.g., Wi-Fi) communication unit, a ZigBee communication unit, an infrared Data Association (IrDA) communication unit, a Wi-Fi direct (WFD) communication unit, an ultra wideband (UWB) communication unit, and an Ant+ communication unit.

The wireless communication unit may include a cellular network communication unit, an Internet communication unit, a computer network (e.g., a LAN or a WAN) communication unit, or the like, but embodiments are not limited thereto.

Although not shown in FIG. 10, the aerosol generating device 1 may further include a connection interface, such as a universal serial bus (USB) interface, and may transmit/receive information by being connected to another external device through the connection interface, such as a USB interface, or may charge the battery 11.

The controller 12 may control overall operations of the aerosol generating device 1. According to an embodiment, the controller 12 may include at least one processor. The processor may be implemented by an array of a plurality of logic gates, or may be implemented by a combination of a general-use microprocessor and a memory in which a program executable by the general-use microprocessor is stored. It will also be understood by one of ordinary skill in the art to which the present embodiment pertains that the processor may be implemented by other types of hardware.

The controller 12 may control supplying of the power of the battery 11 to the heater 18, thereby controlling the temperature of the heater 18. The controller 12 may control the temperature of the cartridge heater 24 and/or the heater 18, based on the temperature of the cartridge heater 24 and/or the heater 18 sensed by the temperature sensor 131. The controller 12 may control power supplied to the cartridge heater 24 and/or the heater 18, based on the temperature of the cartridge heater 24 and/or the heater 18. For example, the controller 12 may determine a target temperature of the cartridge heater 24 and/or the heater 18, based on a temperature profile stored in the memory 17.

The aerosol generating device 1 may include a power supply circuit (not shown) electrically connected to the battery 11 between the battery 11 and the cartridge heater 24 and/or the heater 18. The power supply circuit may be electrically connected to the cartridge heater 24, the heater 18, or an induction coil 181. The power supply circuit may include at least one switching element. The switching element may be implemented by a bipolar junction transistor (BJT), a field effect transistor (FET), or the like. The controller 12 may control the power supply circuit.

The controller 12 may control switching of the switching element of the power supply circuit, thereby controlling the supply of power. The power supply circuit may be an inverter that converts direct current power output by the battery 11 into alternating current power. For example, the inverter may include a full-bridge circuit or half-bridge circuit including a plurality of switching elements.

The controller 12 may turn on the switching element so that power may be supplied from the battery 11 to the cartridge heater 24 and/or the heater 18. The controller 12 may turn off the switching element so that the supply of power to the cartridge heater 24 and/or the heater 18 may be cut off. The controller 12 may adjust a current supplied by the battery 11 by adjusting a frequency and/or duty ratio of a current pulse input to the switching element.

The controller 12 may control a voltage output by the battery 11 by controlling switching of the switching element of the power supply circuit. The power conversion circuit may convert the voltage output by the battery 11. For example, the power conversion circuit may include a Buck-converter that drops the voltage output by the battery 11. For example, the power conversion circuit may be implemented through a Buck-boost converter, a Zener diode, etc.

The controller 12 may adjust the level of the voltage output by the power conversion circuit by controlling an on/off operation of the switching element included in the power conversion circuit. When an on state of the switching element is continued, the level of the voltage output by the power conversion circuit may correspond to the level of the voltage output by the battery 11. A duty ratio with respect to the on/off operation of the switching element may correspond to a ratio of the voltage output by the power conversion circuit to the voltage output by the battery 11. As the duty ratio with respect to the on/off operation of the switching element is decreased, the level of the voltage output by the power conversion circuit may be reduced. The heater 18 may be heated based on the voltage output by the power conversion circuit.

The controller 12 may control power to be supplied to the heater 18, by using at least one method of a pulse width modulation (PWM) method and a proportional-integral-differential (PID) method.

For example, the controller 12 may control supply of a current pulse having a certain frequency and a duty ratio, by using the PWM method. The controller 12 may control power supplied to the heater 18 by adjusting the frequency and duty ratio of the current pulse.

For example, the controller 12 may determine a target temperature that is a target of control, based on the temperature profile. The controller 12 may control the power supplied to the heater 18 by using a PID method, which is a feedback control method using a difference value between the temperature of the heater 18 and the target temperature thereof, a value obtained by integrating the difference value according to the flow of time, and a value obtained by differentiating the difference value according to the flow of time.

The controller 12 may prevent the cartridge heater 24 and/or the heater 18 from being overheated. For example, the controller 12 may control an operation of the power conversion circuit so that the supply of the power to the cartridge heater 24 and/or the heater 18 is stopped, based on the temperature of the cartridge heater 24 and/or the heater 18 exceeding a preset limit temperature. For example, the controller 12 may reduce the amount of power supplied to the cartridge heater 24 and/or the heater 18, based on the temperature of the cartridge heater 24 and/or the heater 18 exceeding the preset limit temperature. For example, the controller 12 may determine that the aerosol generating material accommodated in the cartridge 19 is exhausted, based on the temperature of the cartridge heater 24 exceeding the limit temperature, and may cut off the supply of power to the cartridge heater 24.

The controller 12 may control charging/discharging of the battery 11. The controller 12 may check the temperature of the battery 11, based on an output signal of the temperature sensor 131.

When a power wire is connected to a battery terminal of the aerosol generating device 1, the controller 12 may check whether the temperature of the battery 11 is greater than or equal to a first limit temperature that is a basis for blocking charging of the battery 11. When the temperature of the battery 11 is less than the first limit temperature, the controller 12 may control the battery 11 to be charged, based on a preset charging current. When the temperature of the battery 11 is equal to or greater than the first limit temperature, the controller 12 may block charging of the battery 11.

When power of the aerosol generating device 1 is in an on state, the controller 12 may check whether the temperature of the battery 11 is greater than or equal to a second limit temperature that is a basis for cutting off discharging of the battery 11. When the temperature of the battery 11 is less than the second limit temperature, the controller 12 may control the power stored in the battery 11 to be used. When the temperature of the battery 11 is greater than or equal to the second limit temperature, the controller 12 may stop using the power stored in the battery 11.

The controller 12 may calculate the remaining capacity of the power stored in the battery 11. For example, the controller 12 may calculate the remaining capacity of the battery 11, based on a voltage and/or current sensing value of the battery 11.

The controller 12 may determine whether the stick S is inserted into the insertion space, through the insertion detection sensor 133. The controller 12 may determine that the stick S is inserted, based on an output signal of the insertion detection sensor 133. When it is determined that the stick S is inserted into the insertion space, the controller 12 may control power to be supplied to the cartridge heater 24 and/or the heater 18. For example, the controller 12 may supply power to the cartridge heater 24 and/or the heater 18, based on the temperature profile stored in the memory 17.

The controller 12 may determine whether the stick S is removed from the insertion space. For example, the controller 12 may determine whether the stick S is removed from the insertion space, through the insertion detection sensor 133. For example, when the temperature of the heater 18 is greater than or equal to the limit temperature or when a temperature change slope of the heater 18 is equal to or greater than a set slope, the controller 12 may determine that the stick S is removed from the insertion space. When it is determined that the stick S has been removed from the insertion space, the controller 12 may block supply of power to the cartridge heater 24 and/or the heater 18.

The controller 12 may control a power supply time and/or a power supply amount for the heater 18 according to the state of the stick S detected by the sensor 13. The controller 12 may check a level range in which the level of a signal of a capacitance sensor is included, based on a lookup table. The controller 12 may check a moisture amount for the stick S according to the checked level range.

When the stick S is in an overwatering state, the controller 12 may control the power supply time for the heater 18 to thereby increase the preheating time of the stick S rather than when the stick S is in a general state.

The controller 12 may determine whether the stick S inserted into the insertion space is reused, through the reuse detection sensor 134. For example, the controller 12 may compare a sensing value of a signal of the reuse detection sensor with a first reference range in which a first color is included, and may determine that the stick S is not used when the sensing value is included in the first reference range. For example, the controller 12 may compare the sensing value of the signal of the reuse detection sensor with a second reference range in which a second color is included, and may determine that the stick S is used when the sensing value is included in the second reference range. When it is determined that the stick S is used, the controller 12 may block supply of power to the cartridge heater 24 and/or the heater 18.

The controller 12 may determine whether the cartridge 19 is combined and/or removed, through the cartridge detection sensor 135. For example, the controller 12 may determine whether the cartridge 19 is combined or removed, based on the sensing value of a signal of the cartridge detection sensor.

The controller 12 may determine whether the aerosol generating material of the cartridge 19 is exhausted. For example, the controller 12 may preheat the cartridge heater 24 and/or the heater 18 by applying power, may determine whether the temperature of the cartridge heater 24 exceeds the limit temperature in a preheating section, and, when the temperature of the cartridge heater 24 exceeds the limit temperature, may determine that the aerosol generating material of the cartridge 19 is exhausted. When it is determined that the aerosol generating material of the cartridge 19 is exhausted, the controller 12 may cut off the supply of power to the cartridge heater 24 and/or the heater 18.

The controller 12 may determine whether use of the cartridge 19 is possible. For example, the controller 12 may determine that the use of the cartridge 19 is not possible if a current puff frequency is greater than or equal to a maximum puff frequency set in the cartridge 19, based on data stored in the memory 17. For example, when a total time period during which the heater 24 is heated is greater than or equal to a preset maximum time period or a total amount of power supplied to the cartridge heater 24 is greater than or equal to a preset maximum power amount, the controller 12 may determine that the use of the cartridge 19 is not possible.

The controller 12 may perform determination on the user's inhaling through the puff sensor 132. For example, the controller 12 may determine whether a puff occurs, based on a sensing value of a signal of the puff sensor. For example, the controller 12 may determine the intensity of the puff, based on the sensing value of the signal of the puff sensor 132. When the puff frequency reaches the preset maximum puff frequency or puffs are not sensed for a preset time period or more, the controller 12 may cut off the supply of power to the cartridge heater 24 and/or the heater 18.

The controller 12 may determine whether the cap is combined and/or removed, through the cap detection sensor 136. For example, the controller 12 may determine whether the cap is combined or removed, based on a sensing value of a signal of the cartridge detection sensor.

The controller 12 may control the output unit 14, based on a result of the sensing performed by the sensor 13 For example, when the number of puffs counted by the puff sensor 132 reaches a preset number, the controller 12 may notify the user in advance that the aerosol generating device 1 is ended soon, through at least one of the display 141, the haptic unit 142, and the sound output unit 143. For example, the controller 12 may notify the user through the output unit 14, based on a determination that the stick S is not present in the insertion space. For example, the controller 12 may notify the user through the output unit 14, based on a determination that the cartridge 19 and/or the cap is not mounted. For example, the controller 12 may transmit information about the temperature of the cartridge heater 24 and/or the heater 18 to the user through the output unit 14.

The controller 12 may store and update a history of an event occurred in the memory 17, based on certain event occurrence. The event may include insertion detection of the stick S, heating start of the stick S, puff detection, puff end, overheat detection of the cartridge heater 24 and/or the heater 18, detection of overvoltage application to the cartridge heater 24 and/or the heater 18, heating end of the stick S, an operation such as power on/off of the aerosol generating device 1, charging start of the battery 11, detection of overcharging of the battery 11, and charging end of the battery 11, which are performed by the aerosol generating device 1. The history of the event may include, for example, a date and time of the event, log data corresponding to the event. For example, when a predetermined event is insertion detection of the stick S, log data corresponding to the event may include data for the sensing value, etc. of the insertion detection sensor 133. For example, when the predetermined event is overheating detection of the cartridge heater 24 and/or the heater 18, the log data corresponding to the event may include data about, for example, the temperature of the cartridge heater 24 and/or heater 18, the voltage applied to the cartridge heater 24 and/or the heater 18, and a current flowing through the cartridge heater 24 and/or the heater 18.

The controller 12 may control a communication link to be formed with an external device, such as the user's mobile terminal. When receiving data on authentication from an external device through the communication link, the controller 12 may remove limitation of the use of at least one function of the aerosol generating device 1. The data on authentication may include data indicating completion of user authentication with respect to a user corresponding to the external device. The user may perform user authentication through the external device. The external device may determine whether user data is valid, based on the user's birthday and a unique number representing the user, and may receive data about use authority of the aerosol generating device 1 from an external server. The external device may transmit data indicating the completion of the user authentication to the aerosol generating device 1, based on the data about the use authority. When the user authentication is completed, the controller 12 may remove limitation of the use of the at least one function of the aerosol generating device 1. For example, when the user authentication is completed, the controller 12 may_remove the limitation of the use of a heating function of supplying power to the heater 18.

The controller 12 may transmit data on the state of the aerosol generating device 1 to the external device through the communication link formed with the external device. Based on the received state data, the external device may output the remaining capacity, the operation mode, etc. of the battery 11 of the aerosol generating device 1 through a display of the external device.

The external device may transmit a position search request to the aerosol generating device 1, based on an input of starting a position search of the aerosol generating device 1. When receiving a position search request from the external device, the controller 12 may control at least one of output devices to perform an operation corresponding to a position search, based on the received position search request. For example, the haptic unit 142 may generate vibration in response to the position search request. For example, in response to the position search request, the display 141 may output an object that corresponds to position search and search end.

The controller 12 may control firmware update to be performed, when receiving firmware data from the external device. The external device may check a current version of the firmware of the aerosol generating device 1 and determine whether a new version of the firmware is present. When receiving an input of requesting for firmware download, the external device may receive the new version of the firmware data and transmit the new version of the firmware data to the aerosol generating device 1. As the controller 12 receives the new version of the firmware data, the controller 12 may control the firmware update of the aerosol generating device 1 to be performed.

The controller 12 may transmit data on a sensing value of the at least one sensor 13 to an external server (not shown) through the communication unit 16, and may receive and store a learning model generated by learning sensing values from a server through machine learning, such as deep learning. The controller 12 may perform, for example, an operation of determining the user's inhaling pattern and an operation of generating a temperature profile, by using the learning model received from the server. The controller 12 may store, for example, sensing value data of the at least one sensor 13 and data for training an artificial neural network (ANN) in the memory 17. For example, the memory 17 may store a database for each component provided in the aerosol generating device 1, a weight that forms an ANN structure, and biases, which are for training the ANN. The controller 12 may learn data on a sensing value of at least one sensor 13, the user's inhaling pattern, the temperature profile, etc. stored in the memory 17, and may generate at least one learning model used for, for example, determination of the user's inhaling pattern, generation of the temperature profile.

Any or all of the embodiments of the present disclosure described above are neither exclusive nor distinct from each other. Any or all of the embodiments of the present disclosure described above may be combined or used in combination with each other in their respective configurations or functions.

For example, a component A described in a particular embodiment and/or drawing may be combined with a component B described in another embodiment and/or drawing. In other words, even when the coupling between components is not directly described, it means that the coupling is possible, except in cases where coupling is described as impossible.

The detailed descriptions given above should not be construed as limiting in any respect and should be considered illustrative only. The scope of the present disclosure should be determined by a reasonable interpretation of the appended claims, and all changes coming within the equivalent scope of the present disclosure are intended to be included within the scope of the present disclosure.

## Claims

1. An aerosol generating device comprising:
a body comprising an accommodating space for accommodating an aerosol generating article;
a heater configured to heat the aerosol generating article accommodated in the accommodating space;
a battery configured to supply power to an interior of the body;
a receiving terminal arranged in a portion of the body to receive power and transmit power to internal components of the body; and
a fastening member detachably coupling the battery to the body,
wherein the body further comprises a first extension and a second extension extending while facing each other, and a coupling space for accommodating the battery between the first extension and the second extension, and
power is transmitted from the battery accommodated in the coupling space to the receiving terminal via the fastening member penetrating through the first extension.

2. The aerosol generating device of claim 1,
wherein the first extension comprises an upper groove that is open in a direction opposite to a direction facing the coupling space and is configured to accommodate the fastening member.

3. The aerosol generating device of claim 2,
wherein the receiving terminal is arranged between the upper groove and the fastening member accommodated in the upper groove.

4. The aerosol generating device of claim 2,
wherein the first extension comprises a through hole connected to the upper groove, and
at least a portion of the fastening member is arranged to protrude through the through hole to the coupling space.

5. The aerosol generating device of claim 2,
wherein the fastening member comprises a first portion accommodated in the upper groove and a second portion having a diameter smaller than that of the first portion, extending from the first portion, and penetrating through the first extension.

6. The aerosol generating device of claim 2,
further comprising an elastic member arranged in the upper groove and supporting the fastening member between a bottom surface of the upper groove and the fastening member.

7. The aerosol generating device of claim 2,
wherein the first extension further comprises a lower groove that is open toward the coupling space and is arranged to be aligned with the upper groove in a direction in which the upper groove is open.

8. The aerosol generating device of claim 7,
wherein the fastening member comprises a first portion accommodated in the upper groove, a second portion having a diameter smaller than that of the first portion, extending from the first portion, and penetrating through the first extension, and a third portion having a diameter greater than that of the second portion and accommodated in the lower groove.

9. The aerosol generating device of claim 7,
wherein a region of the receiving terminal arranged in the lower groove comprises a protruding portion protruding toward the coupling space, and
the fastening member penetrates through the first extension and presses the protruding portion to contact the receiving terminal to the battery.

10. The aerosol generating device of claim 7,
wherein the battery comprises a convex portion accommodated in the lower groove.

11. The aerosol generating device of claim 2,
wherein the battery comprises a coupling groove that allows insertion of the fastening member penetrating through the first extension from the upper groove.

12. The aerosol generating device of claim 1,
wherein the fastening member comprises a head portion coupled to an outer surface of the battery, and a body portion having a diameter smaller than a diameter of the head portion, extending from the head portion, and penetrating through the first extension.

13. The aerosol generating device of claim 12,
further comprising a coupling ring for coupling the fastening member to the first extension by coupling to a region of the body portion protruding from the first extension,
wherein the receiving terminal is arranged to surround a portion of the body portion penetrating through the first extension.

14. The aerosol generating device of claim 12,
further comprising a first cover having electrical conductivity, surrounding the body portion, and penetrating through a region of the first extension,
wherein the receiving terminal is arranged to surround a portion of the first cover penetrating through the first extension.

15. The aerosol generating device of claim 14,
further comprising a second cover coupled to and surrounding a portion of the first cover protruding from the first extension by a force-fit,
wherein the second cover is arranged above the region of the first extension and presses the first extension toward the head portion.
